# EUROPEAN PATENT SPECIFICATION

(11) **EP 3 125 501 B1**
(45) Date of publication and mention of the grant of the patent: **22.08.2018**
(21) Application number: 14889469.4
(22) Date of filing: 15.04.2014
(51) Int. Cl.: H04L 29/08

(54) **FILE SYNCHRONIZATION METHOD, SERVER, AND TERMINAL**
DATEISYNCHRONISIERUNGSVERFAHREN, -SERVER UND ENDGERÄT
PROCÉDÉ, SERVEUR, ET TERMINAL DE SYNCHRONISATION DE FICHIERS

(43) Date of publication of application: 01.02.2017
(73) Proprietor: Huawei Technologies Co., Ltd., Longgang District Shenzhen, Guangdong 518129 (CN)
(72) Inventor: XU, Kaifu, Shenzhen Guangdong 518129 (CN)
(74) Representative: Maiwald Patent- und Rechtsanwaltsgesellschaft mbH
(86) International application number: PCT/CN2014/075349
(87) International publication number: WO 2015/157904

(56) References cited:
- EP-A1- 2 706 719
- EP-A2- 1 130 513
- CN-A- 102 404 338
- CN-A- 103 220 358
- CN-A- 103 457 905
- CN-A- 103 685 385
- US-A1- 2005 138 082
- US-A1- 2005 144 200

## Description

### TECHNICAL FIELD

The present application relates to the field of data synchronization technologies, and in particular, to a file synchronization method, a server, and a terminal.

### BACKGROUND

As Internet technologies develop and an informatization degree improves, to improve convenience and security of data management, an end user may synchronously back up file data in a terminal to another terminal by using a data synchronization technology, so as to implement management of same file data on different terminals. Currently, two manners are commonly used for file data synchronization. In manner 1, a terminal queries a server side for a directory structure of file data, compares a directory structure of file data stored in the terminal with that of the file data stored on the server side, and updates the file data in the terminal according to a difference between the directory structures of these two parties. In manner 2, a terminal downloads a directory structure of file data stored on a server side, compares a directory structure of file data stored in the terminal with that of the file data stored on the server side, and updates the file data in the terminal according to a difference between the directory structures of these two parties.

In manner 1, each time when the terminal synchronizes the file data, the terminal needs to perform multiple interactions with the server side, transverse each layer of a directory, a subdirectory, and a subfile that are of the file data stored on the server side, and then compare the directory structure of the file data stored on the server side with the directory structure of the file data stored in the terminal. Therefore, it takes a relative long time for synchronization. In manner 2, before synchronization, the terminal needs to download, to the terminal, the directory structure of the file data stored on the server side. When a size of the directory structure of the file data is relatively large, downloading the directory structure not only increases pressure on bandwidth but also consumes a relatively long time, which affects synchronization efficiency.

EP 1 130 513 A2 discloses systems and methods to keep information synchronized between a plurality of devices. When an update is to be propagated from a first device to a second device, a Delta is generated based on the version that is known to exist on the second device, and only this Delta is transferred over the network. In this manner, a bandwidth requirement is reduced, and the speed of the synchronization is improved.

EP 2 706 719 A1 discloses further systems and methods for file synchronization. To propagate an update to a server, a terminal decomposes the difference between a first file list snapshot and a second file list snapshots into operations on individual files and adds these operations to the first file list snapshot.

US 2005/144 200 A1 discloses systems and methods for sharing, synchronizing and backing up data. This solution is specifically designed to permit connectivity across firewalls.

### SUMMARY

The present application provides a file synchronization method, a server, and a terminal, which can improve efficiency in synchronizing file data, and reduce consumption of a network resource and pressure on bandwidth during file data synchronization.

According to a first aspect, the present application provides a file synchronization method, including:
receiving a file synchronization request sent by a terminal;
responding to the file synchronization request, and searching data of various versions of a file and stored in a server for first record data, where the first record data includes an operation record generated for the file of a predetermined version after the terminal last synchronized the file; and
sending the first record data to the terminal, so that the terminal obtains, according to the first record data and second record data in the terminal, an operation that should be performed by the terminal, where the second record data includes an operation record of operations performed on the file after the terminal last synchronized the file.

Before the first record data is sent to the terminal, the operation record is divided by converting it into basic operation records of ADD or DELETE that involve only one path, and the basic operation records obtained after division are combined according to the operation path, so as to remove redundant data and intuitively present a final change of the file caused by the first record data.

With reference to the first aspect, in a first possible implementation manner, the file synchronization request includes a version number of the file that was last synchronized by the terminal and a latest version number for current synchronization; and
the first record data includes all operation records generated for the file of the predetermined version after the terminal last synchronized the file, where a version number of the predetermined version is later than the version number of the file that was last synchronized by the terminal and is earlier than or equal to the latest version number for the current synchronization.

With reference to the first aspect, in a second possible implementation manner, the file synchronization request includes a version number of the file that was last synchronized by the terminal and a quantity threshold; and
the first record data includes a predetermined quantity of operation records successively generated for the file of the predetermined version after the terminal last synchronized the file, where a version number of the predetermined version is later than the version number of the file that was last synchronized by the terminal, and a value of the predetermined quantity is equal to the quantity threshold.

With reference to the first aspect, and the first and the second possible implementation manners of the first aspect, in a third possible implementation manner, after the sending the first record data to the terminal, the method further includes:
receiving identification information of the terminal, a version number for the current synchronization of the file performed by the terminal, and a user identifier of the terminal that are sent by the terminal;
updating, according to the identification information of the terminal, the version number for the current synchronization of the file performed by the terminal, and the user identifier of the terminal, a record of synchronization performed by a user on the terminal;
querying for a version number of the file that was last synchronized by another terminal of the user; and
if the version number for the current synchronization of the file performed by the terminal is earlier than the version number of the file that was last synchronized by the another terminal of the user, deleting, from the data of the various versions of the file stored in the server, an operation record generated before the file synchronization request was received.

According to a second aspect, the present application provides a file synchronization method, including:
sending a file synchronization request to a server;
searching for second record data, where the second record data includes an operation record of operations performed on a file after a terminal last synchronized the file;
receiving first record data sent after the server responds to the file synchronization request, where the first record data includes an operation record generated, for the file of a predetermined version, from data of various versions of the file stored in the server, after the terminal last synchronized the file; and
obtaining, according to the first record data and the second record data, an operation that should be performed by the terminal, and performing the operation.

The method further comprises searching for each operation record of operations performed on the file after the terminal last synchronized the file.

The first record data and the second record data is simplified by: dividing the operation record therein by converting it into basic operation records of ADD or DELETE that involve only one path, and combining the basic operation records obtained after division according to the operation path, so as to remove redundant data and intuitively present a final change of the file caused by the first and second record data.

The obtaining an operation that should be performed by the terminal is specifically: using the time point at which the terminal previously completed synchronization of the file as a start point; combining, in ascending order of operation time, operation records that are in the first record data and the second record data and have a same operation path; and obtaining, according to a combined operation record, the operation that should be performed by the terminal.

With reference to the second aspect, in a first implementation manner, the searching for second record data includes:
searching for each operation record of operations performed on the file after the terminal last synchronized the file; and
dividing or combining each operation record according to an operation path to obtain the second record data.

With reference to the second aspect, in a second implementation manner, the first record data includes at least one operation record; and
the obtaining, according to the first record data and the second record data, an operation that should be performed by the terminal, and performing the operation includes:
dividing or combining the at least one operation record according to an operation path to simplify the first record data; and
obtaining, according to simplified first record data and the second record data, the operation that should be performed by the terminal, and performing the operation.

With reference to the second aspect, and the first and the second implementation manners of the second aspect, in a third possible implementation manner, after the obtaining, according to the first record data and the second record data, an operation that should be performed by the terminal, and performing the operation, the method further includes:
recording a latest version number of the file in the first record data as a version number for current synchronization of the file performed by the terminal; and
sending identification information of the terminal, the version number for the current synchronization of the file performed by the terminal, and a user identifier of the terminal to the server, so that the server updates a record of synchronization performed by a user on the terminal.

According to a third aspect, the present application provides a server, including:
a first receiving module, configured to receive a file synchronization request sent by a terminal;
a searching module, configured to respond to the file synchronization request, and search data of various versions of a file stored in the server for first record data, where the first record data includes an operation record generated for the file of a predetermined version after the terminal last synchronized the file; and
a sending module, configured to send the first record data to the terminal, so that the terminal obtains, according to the first record data and second record data in the terminal, an operation that should be performed by the terminal, where the second record data includes an operation record of operations performed on the file after the terminal last synchronized the file.

The server is configured to: before the sending module sends the first record data to the terminal, divide the operation record by converting it into basic operation records of ADD or DELETE that involve only one path, and combine the basic operation records obtained after division according to the operation path, so as to remove redundant data and intuitively present a final change of the file caused by the first record data.

With reference to the third aspect, in a first possible implementation manner, the file synchronization request includes a version number of the file that was last synchronized by the terminal and a latest version number for current synchronization; and
the first record data includes all operation records generated for the file of the predetermined version after the terminal last synchronized the file, where a version number of the predetermined version is later than the version number of the file that was last synchronized by the terminal and is earlier than or equal to the latest version number for the current synchronization.

With reference to the third aspect, in a second possible implementation manner, the file synchronization request includes a version number of the file that was last synchronized by the terminal and a quantity threshold; and
the first record data includes a predetermined quantity of operation records successively generated for the file of the predetermined version after the terminal last synchronized the file, where a version number of the predetermined version is later than the version number of the file that was last synchronized by the terminal, and a value of the predetermined quantity is equal to the quantity threshold.

With reference to the third aspect, and the first and the second possible implementation manners of the third aspect, in a third possible implementation manner, the server further includes:
a second receiving module, configured to receive identification information of the terminal, a version number for the current synchronization of the file performed by the terminal, and a user identifier of the terminal that are sent by the terminal;
an updating module, configured to update, according to the identification information of the terminal, the version number for the current synchronization of the file performed by the terminal, and the user identifier of the terminal, a record of synchronization performed by a user on the terminal;
a querying module, configured to query for a version number of the file that was last synchronized by another terminal of the user; and
a deleting module, configured to: if the version number for the current synchronization of the file performed by the terminal is earlier than the version number of the file that was last synchronized by the another terminal of the user, delete, from the data of the various versions of the file stored in the server, an operation record generated before the file synchronization request was received.

According to a fourth aspect not presently claimed, the present application provides a computer storage medium, where the computer storage medium stores a program, and the program performs all or some of the steps of the file synchronization method provided in the first aspect of the present application.

According to a fifth aspect not presently claimed, the present application provides a server, including: an input apparatus, an output apparatus, and a processor, where the input apparatus, the output apparatus, and the processor are connected through a bus, where:
the input apparatus is configured to receive a file synchronization request sent by a terminal;
the processor responds to the file synchronization request, and searches data of various versions of a file stored in the server for first record data, where the first record data includes an operation record generated for the file of a predetermined version after the terminal last synchronized the file; and
the output apparatus is configured to send the first record data to the terminal, so that the terminal obtains, according to the first record data and second record data in the terminal, an operation that should be performed by the terminal, where the second record data includes an operation record of operations performed on the file after the terminal last synchronized the file.

With reference to the fifth aspect, in a first possible implementation manner, the file synchronization request includes a version number of the file that was last synchronized by the terminal and a latest version number for current synchronization; and
the first record data includes all operation records generated for the file of the predetermined version after the terminal last synchronized the file, where a version number of the predetermined version is later than the version number of the file that was last synchronized by the terminal and is earlier than or equal to the latest version number for the current synchronization.

With reference to the fifth aspect, in a second possible implementation manner, the file synchronization request includes a version number of the file that was last synchronized by the terminal and a quantity threshold; and
the first record data includes a predetermined quantity of operation records successively generated for the file of the predetermined version after the terminal last synchronized the file, where a version number of the predetermined version is later than the version number of the file that was last synchronized by the terminal, and a value of the predetermined quantity is equal to the quantity threshold.

With reference to the fifth aspect, and the first and the second possible implementation manners of the fifth aspect, in a third possible implementation manner, the input apparatus is further configured to receive identification information of the terminal, a version number for the current synchronization of the file performed by the terminal, and a user identifier of the terminal that are sent by the terminal; and
the processor is further configured to:
update, according to the identification information of the terminal, the version number for the current synchronization of the file performed by the terminal, and the user identifier of the terminal, a record of synchronization performed by a user on the terminal;
query for a version number of the file that was last synchronized by another terminal of the user; and
if the version number for the current synchronization of the file performed by the terminal is earlier than the version number of the file that was last synchronized by the another terminal of the user, delete, from the data of the various versions of the file stored in the server, an operation record generated before the file synchronization request was received.

According to a sixth aspect, the present application provides a terminal, including:
a first sending module, configured to send a file synchronization request to a server;
a searching module, configured to search for second record data, where the second record data includes an operation record of operations performed on a file after the terminal last synchronized the file;
a receiving module, configured to receive first record data sent after the server responds to the file synchronization request, where the first record data includes an operation record generated, for the file of a predetermined version, from data of various versions of the file stored in the server, after the terminal last synchronized the file; and
an execution module, configured to obtain, according to the first record data and the second record data, an operation that should be performed by the terminal, and perform the operation.

The searching module includes a searching unit, configured to search for each operation record of operations performed on the file after the terminal last synchronized the file, and the terminal is configured to: simplify the second record data by: dividing the operation record therein by converting it into basic operation records of ADD or DELETE that involve only one path, and combining the basic operation records obtained after division according to the operation path, so as to remove redundant data and intuitively present a final change of the file caused by the second record data.

The execution module includes a second record simplifying unit that is configured to simplify the first record data by: dividing the operation record therein by converting it into basic operation records of ADD or DELETE that involve only one path, and combining the basic operation records obtained after division according to the operation path, so as to remove redundant data and intuitively present a final change of the file caused by the first record data.

The execution module is configured to obtain the operation that should be performed by the terminal by: using the time point at which the terminal previously completed synchronization of the file as a start point; combining, in ascending order of operation time, operation records that are in the first record data and the second record data and have a same operation path; and obtaining, according to a combined operation record, the operation that should be performed by the terminal.

With reference to the sixth aspect, in a first possible implementation manner, the searching module includes:
a searching unit, configured to search for each operation record of operations performed on the file after the terminal last synchronized the file; and
a first simplifying unit, configured to divide or combine each operation record according to an operation path to obtain the second record data.

With reference to the sixth aspect, in a second possible implementation manner, the first record data includes at least one operation record; and
the execution module includes:
a second simplifying unit, configured to divide or combine the at least one operation record according to an operation path to simplify the first record data; and
an execution unit, configured to obtain, according to simplified first record data and the second record data, an operation that should be performed by the terminal, and perform the operation.

With reference to the sixth aspect, and the first and the second possible implementation manners of the sixth aspect, in a third possible implementation manner, the terminal further includes:
a recording module, configured to record a latest version number of the file in the first record data as a version number for current synchronization of the file performed by the terminal; and
a second sending module, configured to send identification information of the terminal, the version number for the current synchronization of the file performed by the terminal, and a user identifier of the terminal to the server, so that the server updates a record of synchronization performed by a user on the terminal.

According to a seventh aspect not presently claimed, the present application provides a computer storage medium, where the computer storage medium stores a program, and the program performs all or some of the steps of the file synchronization method provided in the second aspect of the present application.

According to an eighth aspect not presently claimed, the present application provides a terminal, including: an input apparatus, an output apparatus, and a processor, where the input apparatus, the output apparatus, and the processor are connected through a bus, where:
the output apparatus is configured to send a file synchronization request to a server;
the input apparatus is configured to receive first record data sent after the server responds to the file synchronization request, where the first record data includes an operation record generated, for a file of a predetermined version, from data of various versions of the file stored in the server, after the terminal last synchronized the file; and
the processor is configured to:
   search for second record data, where the second record data includes an operation record of operations performed on the file after the terminal last synchronized the file; and
   obtain, according to the first record data and the second record data, an operation that should be performed by the terminal, and perform the operation.

With reference to the eighth aspect, in a first possible implementation manner, when the processor searches for the second record data, specific steps are as follows:
searching for each operation record of operations performed on the file after the terminal last synchronized the file; and
dividing or combining each operation record according to an operation path to obtain the second record data.

With reference to the eighth aspect, in a second possible implementation manner, the first record data includes at least one operation record; and
when the processor obtains, according to the first record data and the second record data, the operation that should be performed by the terminal, and performs the operation, specific steps are as follows:
dividing or combining the at least one operation record according to an operation path to simplify the first record data; and
obtaining, according to simplified first record data and the second record data, the operation that should be performed by the terminal, and performing the operation.

With reference to the eighth aspect, and the first and the second possible implementation manners of the eighth aspect, in a third possible implementation manner,
the processor is further configured to record a latest version number of the file in the first record data as a version number for current synchronization of the file performed by the terminal; and
the output apparatus is further configured to send identification information of the terminal, the version number for the current synchronization of the file performed by the terminal, and a user identifier of the terminal to the server, so that the server updates a record of synchronization performed by a user on the terminal.

In the present application, after receiving a file synchronization request sent by a terminal, a server searches stored data of various versions of a file for an operation record generated for the file after the terminal previously synchronized the file and sends the operation record to the terminal, without a need for performing multiple interactions with the terminal. In addition, compared with an entire directory structure of the file, a data volume of the operation record of the file is relatively small, which can not only reduce a transmission time but also reduce consumption of a network resource of a user. The terminal may determine, with reference to an operation record sent by the server and an operation record of operations performed on the file after the terminal previously synchronized the file, an operation that should be performed, without a need for traversing a file directory in the server layer by layer or comparing the file directory in the server with a file directory in the terminal. In this way, a synchronization time can be effectively reduced, and synchronization efficiency can be improved.

### BRIEF DESCRIPTION OF DRAWINGS

To describe the technical solutions in the present application more clearly, the following briefly introduces the accompanying drawings required in embodiments. Apparently, the accompanying drawings in the following description show merely some embodiments of the present application, and a person of ordinary skill in the art may still derive other drawings from these accompanying drawings without creative efforts.
FIG. 1 is a schematic flowchart of an embodiment of a file synchronization method according to the present application;
FIG. 2 is a schematic flowchart of another embodiment of a file synchronization method according to the present application;
FIG. 3 is a schematic flowchart of still another embodiment of a file synchronization method according to the present application;
FIG. 4 is a schematic diagram of a structure of an embodiment of a server according to the present application;
FIG. 5 is a schematic diagram of a structure of another embodiment of a server according to the present application;
FIG. 6 is a schematic diagram of a structure of still another embodiment of a server according to the present application;
FIG. 7 is a schematic diagram of a structure of an embodiment of a terminal according to the present application;
FIG. 8 is a schematic diagram of a structure of another embodiment of a terminal according to the present application; and
FIG. 9 is a schematic diagram of a structure of still another embodiment of a terminal according to the present application.

### DESCRIPTION OF EMBODIMENTS

The following clearly and completely describes the technical solutions in the embodiments of the present application with reference to the accompanying drawings in the embodiments of the present application. Apparently, the described embodiments are merely some but not all of the embodiments of the present application. All other embodiments obtained by a person of ordinary skill in the art based on the embodiments of the present application without creative efforts shall fall within the protection scope of the present application.

The present application provides a file synchronization method, a server, and a terminal, which can shorten a synchronization time, improve synchronization efficiency, and reduce consumption of a network resource. Details are separately illustrated in the following with reference to the accompanying drawings.

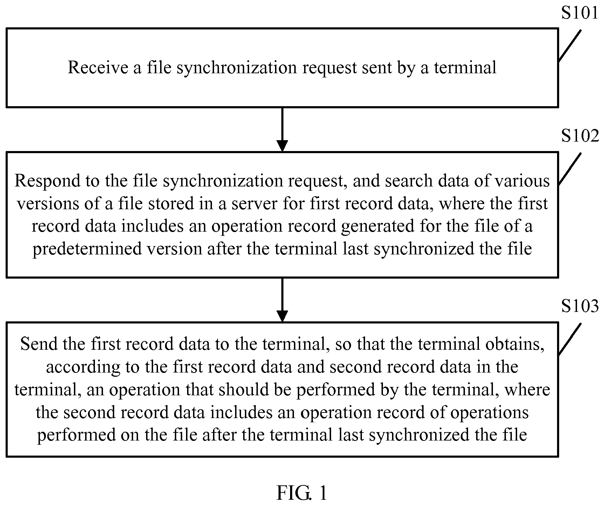

Referring to FIG. 1, FIG. 1 is a schematic flowchart of an embodiment of a file synchronization method according to the present application. The file synchronization method shown in FIG. 1 may be specifically implemented by a server. As shown in FIG. 1, the file synchronization method may include the following steps:

Step S101: Receive a file synchronization request sent by a terminal.

In the present application, the server receives the file synchronization request sent by the terminal, where the file synchronization request may indicate a file that needs to be currently synchronized by the terminal, a time at which the terminal last synchronized the file, a version number of the file that was last synchronized by the terminal, and/or data (including a directory structure and/or an operation record, and the like) that needs to be provided by the server when the terminal currently synchronizes the file.

Step S102: Respond to the file synchronization request, and search data of various versions of a file stored in the server for first record data, where the first record data includes an operation record generated for the file of a predetermined version after the terminal last synchronized the file.

In specific implementation, the first record data is an operation record, obtained from data of various versions of the file and sent by another terminal or a data management application to the server, which is generated for the file of the predetermined version due to various modification operations such as insertion, addition, deletion, and the like after the terminal completed the last synchronization of the file. Specifically, the foregoing predetermined version is determined by the file synchronization request sent by the terminal.

In a possible implementation manner, the file synchronization request may include a version number of the file that was last synchronized by the terminal and a latest version number for current synchronization. In this case, the first record data includes all operation records generated for the file of the predetermined version after the terminal last synchronized the file, where the predetermined version may be any version whose version number is from the version number of the file that was last synchronized by the terminal to the latest version number for the current synchronization (including the latest version number for the current synchronization). Specifically, the latest version number for the current synchronization may be the latest version number of the current file, or may be any version number that is later than a version number of the last synchronization, which may specifically depend on a current network status of the terminal. For example, when a network resource of the terminal is sufficient (for example, in a state of a broadband network connection or a wireless network connection), the latest version number for the current synchronization may be the latest version number of the current file; when the terminal is short of a network resource (for example, in a state of a mobile network connection), the latest version number for the current synchronization may be later than the version number of the file that was last synchronized by the terminal and earlier than the latest version number of the current file. For example, if the version number of the file that was last synchronized by the terminal is V1.0, a time is 2014-02-25 9:00:00, the latest version number of the file so far is V9.0, but the terminal is in the state of the mobile network connection, and remaining traffic is not much, then the latest version number for the current synchronization may be V4.0, the foregoing predetermined version is from V2.0 to V4.0, and the first record data includes an operation record generated for the file of a version from V2.0 to V4.0 after 2014-02-25 9:00:00.

In a possible implementation manner, the file synchronization request may include a version number of the file that was last synchronized by the terminal and a quantity threshold. In this case, the first record data may include a predetermined quantity of operation records successively generated for the file of the predetermined version after the terminal completed the last synchronization of the file, where a version number of the predetermined version is later than the version number of the file that was last synchronized by the terminal, and a value of the predetermined quantity is equal to the quantity threshold. In specific implementation, file data whose version number is later than the version number of the file that was last synchronized by the terminal may be first found from the data of the various versions of the file stored in the server; then, starting from a time point at which the terminal completed the latest synchronization of the file, the predetermined quantity (the value of the predetermined quantity is equal to the quantity threshold in the file synchronization request) of operation records are sorted out, in ascending order of operation time, from the found file data, and are used as the first record data.

Step S103: Send the first record data to the terminal, so that the terminal obtains, according to the first record data and second record data in the terminal, an operation that should be performed by the terminal, where the second record data includes an operation record of operations performed on the file after the terminal last synchronized the file.

In specific implementation, the first record data found in step S102 includes at least one operation record.

In a possible implementation manner, if a network resource in an environment in which the terminal is located is sufficient, the server may directly send the at least one found operation record to the terminal, so as to alleviate computing pressure on the server.

In another possible implementation manner, if the terminal is located in a mobile network environment or a congested network channel, before the first record data is sent to the terminal, the at least one operation record may be first divided or combined according to an operation path. For example, "MOVE A, f1 to f2" may be divided into "DELETE A, f1" and "ADD A, f2", and "ADD B, f1", "ADD C, f1", and "DELETE B, f1" may be combined into "ADD C, f1".

For dividing the at least one operation record, the at least one operation record may be converted into basic operation records of ADD or DELETE that involve only one path. Redundant data may be removed by combining, according to the operation path, these basic operation records obtained after division, so as to intuitively present a final change of the file caused by the first record data. In this way, consumption of a network resource and a data transmission time can be reduced.

In some possible implementation manners, after the first record data is sent to the terminal, the file synchronization method may further include:
receiving identification information of the terminal, a version number for the current synchronization of the file performed by the terminal, and a user identifier of the terminal that are sent by the terminal;
updating, according to the identification information of the terminal, the version number for the current synchronization of the file performed by the terminal, and the user identifier of the terminal, a record of synchronization performed by a user on the terminal;
querying for a version number of the file that was last synchronized by another terminal of the user; and
if the version number for the current synchronization of the file performed by the terminal is earlier than the version number of the file that was last synchronized by the another terminal of the user, deleting, from the data of the various versions of the file stored in the server, an operation record generated before the file synchronization request was received.

In specific implementation, the record of synchronization performed by the user on the terminal may include the identification information of the terminal, the user identifier of the terminal, a time of and a version number for synchronizing the file, and the like.

In specific implementation, after the synchronization is completed, if a version stored by the terminal is an earliest version of the file, an operation record that was generated, for the file stored in the server, before a time point at which the current synchronization started may be deleted, so as to reduce redundant storage on the server and alleviate storage pressure on the server.

In the file synchronization method described in FIG. 1, after receiving a file synchronization request sent by a terminal, a server searches stored data of various versions of a file for an operation record generated for the file after the terminal previously synchronized the file, and sends the operation record to the terminal, without a need for performing multiple interactions with the terminal. In addition, compared with an entire directory structure of the file, a data volume of the operation record of the file is relatively small, which not only reduces a transmission time but also can reduce consumption of a network resource of a user. The terminal may determine, with reference to the operation record sent by the server and an operation record of operations performed on the file after the terminal previously synchronized the file, an operation that should be performed, without a need for traversing a file directory in the server layer by layer or comparing the file directory in the server with a file directory in the terminal. In this way, a synchronization time can be effectively reduced, and synchronization efficiency can be improved.

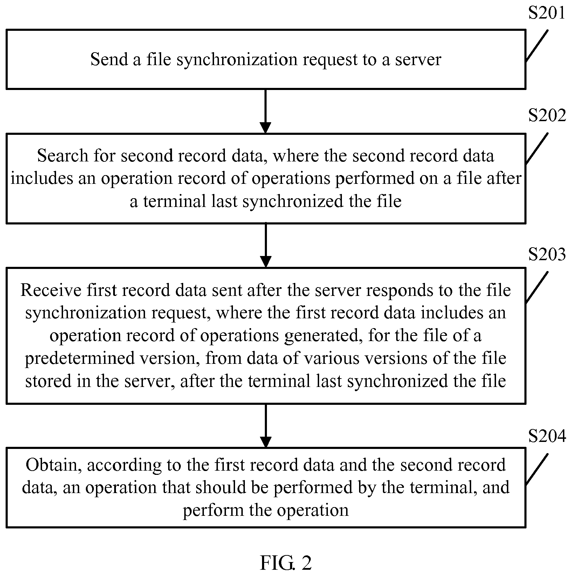

Referring to FIG. 2, FIG. 2 is a schematic flowchart of another embodiment a file synchronization method according to the present application. The file synchronization method shown in FIG. 2 may be specifically implemented by a terminal. As shown in FIG. 2, the file synchronization method may include the following steps:

S201. Send a file synchronization request to a server.

In the present application, the terminal sends the file synchronization request to the server, where the file synchronization request may indicate a file that needs to be currently synchronized by the terminal, a time at which the terminal last synchronized the file, a version number of the file that was last synchronized by the terminal, and/or data (including a directory structure and/or an operation record and the like) that needs to be provided by the server when the file is currently synchronized.

S202. Search for second record data, where the second record data includes an operation record of operations performed on the file after the terminal last synchronized the file.

In the present application, the terminal may include two types: One type is a terminal that can directly acquire an operation record of the file, where the terminal of this type generally includes an input apparatus and a processor and can independently perform an operation on a file, for example, a computer and a tablet computer; the other one is a terminal that cannot directly acquire an operation record of a file, for example, a USB flash drive for synchronization.

Based on different types of terminals, correspondingly, the terminal may also search for the second record data in different implementation manners.

In a possible implementation manner, when the terminal can directly acquire the operation record of the file, the step of searching for second record data may include: first, searching for each operation record of operations performed on the file after the terminal last completed synchronization of the file; and then, dividing or combining these operation records according to an operation path to obtain the second record data.

Specifically, the dividing refers to dividing an operation record that involves multiple paths into multiple basic operation records that involve only one path. For example, "MOVE A, f1 to f2" may be divided into "DELETE A, f1" and "ADD A, f2". The combining refers to combining multiple operation records that have a same operation path into a relatively small quantity of operation records. For example, "ADD B, f1", "ADD C, f1", and "DELETE B, f1" may be combined into "ADD C, f1". The division and combination operations can simplify data required during synchronization and remove redundant data, so as to shorten a synchronization time and improve synchronization efficiency.

In another possible implementation manner, when the terminal cannot directly acquire the operation record of the file, the step of searching for second record data may include: first, reading directory information of the file that was obtained and stored after the terminal last completed synchronization of the file; then, comparing the directory information of the file that was obtained after the terminal last completed synchronization of the file with directory information of the file that is currently and locally stored in the terminal, so that the record of operations that were performed on the file after the terminal last completed synchronization of the file can be obtained, where the operation record includes added data and/or deleted data, and the like, and the operation record is the second record data.

S203. Receive first record data sent after the server responds to the file synchronization request, where the first record data includes an operation record generated, for the file of a predetermined version, from data of various versions of the file stored in the server, after the terminal last synchronized the file.

In specific implementation, based on different content of the file synchronization request, correspondingly, the first record data may also have several different cases.

In a possible implementation manner, the file synchronization request may include a version number of the file that was last synchronized by the terminal and a latest version number for the current synchronization. In this case, the first record data includes all operation records generated for the file of the predetermined version after the terminal last synchronized the file, where the predetermined version may be any version whose version number is from the version number of the file that was last synchronized by the terminal to the latest version number for the current synchronization (including the latest version number for the current synchronization). Specifically, the latest version number for the current synchronization may be the latest version number of the current file, or may be any version number that is later than the version number of the last synchronization, which may specifically depend on a current network status of the terminal.

In a possible implementation manner, the file synchronization request may include the version number of the file that was last synchronized by the terminal and a quantity threshold. In this case, the first record data may include a predetermined quantity of operation records successively generated for the file of the predetermined version after the terminal last completed synchronization of the file, where a version number of the predetermined version is later than the version number of the file that was last synchronized by the terminal, and a value of the predetermined quantity is equal to the quantity threshold.

S204. Obtain, according to the first record data and the second record data, an operation that should be performed by the terminal, and perform the operation.

In specific implementation, the operation that should be performed by the terminal in the current synchronization may be obtained by means of computing and with reference to the operation record generated, after a time point at which the terminal last completed synchronization of the file, for the file that is of the predetermined version and stored in the server, and the operation record of operations performed on the file by the terminal, for example, data that needs to be added, and data that needs to be deleted.

In a possible implementation manner, the first record data sent by the server is multiple operation records that are directly found from data of various versions of the file by the server and have not undergone simplifying processing. In this case, the obtaining, according to the first record data and the second record data, an operation that should be performed by the terminal may include the following steps:

First, divide or combine the multiple operation records according to an operation path to simplify the first record data. Specifically, the dividing refers to dividing an operation record that involves multiple paths into multiple basic operation records that involve only one path, and the combining refers to combining multiple operation records that have a same operation path into a relatively small quantity of operation records. For example, "MOVE A, f1 to f2" may be divided into "DELETE A, f1" and "ADD A, f2", and "ADD B, f1", "ADD C, f1", and "DELETE B, f1" may be combined into "ADD C, f1". The division and combination operations can simplify data required during synchronization and remove redundant data, so as to shorten a synchronization time and improve synchronization efficiency.

Then, obtain, according to simplified first record data and the second record data, the operation that should be performed by the terminal, and perform the operation. In this case, if operation records in both the first record data and the second record data are basic operation records that involve only one operation path, the obtaining, according to the first record data and the second record data, an operation that should be performed by the terminal may be specifically: using the time point at which the terminal previously completed synchronization of the file as a start point; combining, in ascending order of operation time, operation records that are in the first record data and the second record data and have a same operation path; and obtaining, according to a combined operation record, the operation that should be performed by the terminal. For example, operation records whose operation paths are disk 1 (f1) are "ADD A, f1", "ADD B, f1", "ADD C, f1", and "DELETE B, f1", and the foregoing four operation records may be combined into "ADD AB, fl"; then, the operation that should be performed by the terminal is adding "AB" to the disk 1.

In a possible implementation manner, after the obtaining an operation that should be performed by the terminal, and performing the operation, the file synchronization method may further include:
recording a latest version number of the file in the first record data as a version number for current synchronization of the file performed by the terminal; and sending identification information of the terminal, the version number for the current synchronization of the file performed by the terminal, and a user identifier of the terminal to the server, so that the server updates a record of synchronization performed by a user on the terminal.

In specific implementation, the record of synchronization performed by the user on the terminal may include the identification information of the terminal, the user identifier of the terminal, a time and version number of synchronizing the file, and the like.

In the file synchronization method described in FIG. 2, a terminal sends a file synchronization request to a server, searches for second record data, and receives first record data sent by the server, without a need for performing multiple interactions with the server and without a need for traversing a file directory in the server layer by layer. In addition, the first record data includes an operation record generated by a file after the terminal previously synchronized the file. Compared with an entire directory structure of the file, a data volume is relatively small, which not only reduces a transmission time but also can reduce consumption of a network resource of a user. The second record data is an operation record of operations performed on the file after the terminal previously completed synchronization of the file. The terminal can obtain, by dividing and combining the first record data and with reference to the second record data, an operation that should be performed by the terminal, which can not only reduce redundant data and a computing volume required during synchronization but also alleviate computing pressure on the terminal and improve synchronization efficiency.

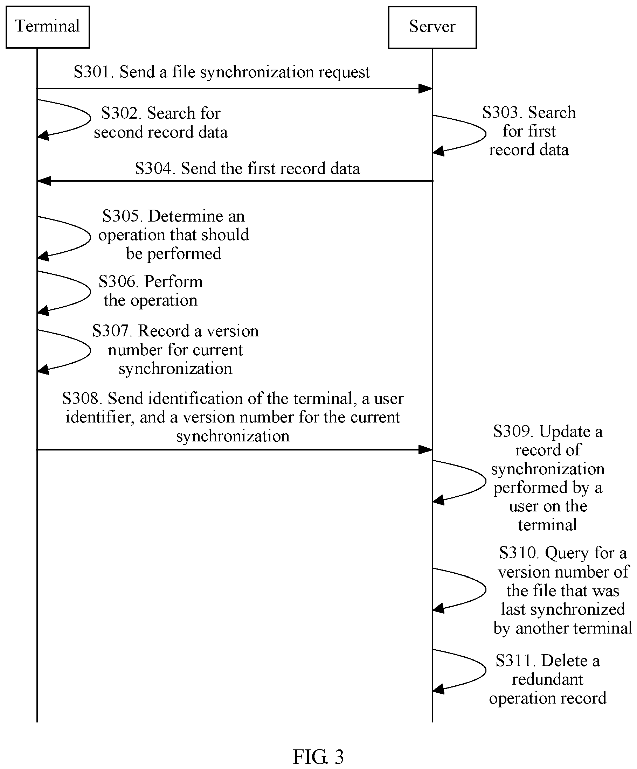

Referring to FIG. 3, FIG. 3 is a schematic flowchart of still another embodiment of a file synchronization method according to the present application. The file synchronization method shown in FIG. 3 may be specifically implemented by an interaction between a server and a terminal. As shown in FIG. 3, the file synchronization method may include the following steps:

S301. The terminal sends a file synchronization request to the server.

In the present application, the terminal sends the file synchronization request to the server, where the file synchronization request may indicate a file that needs to be currently synchronized by the terminal, a time at which the terminal last synchronized the file, a version number of the file that was last synchronized by the terminal, and/or data (including a directory structure and/or an operation record and the like) that needs to be provided by the server when the file is currently synchronized.

S302. The terminal searches for second record data.

In the present application, the second record data includes an operation record of operations performed on the file after the terminal previously completed synchronization of the file. The terminal may include two types: One type is a terminal that can directly acquire an operation record of a file, where the terminal of this type generally includes an input apparatus and a processor and can independently perform an operation on a file, for example, a computer and a tablet computer; the other one is a terminal that cannot directly acquire an operation record of a file, for example, a USB flash drive for synchronization.

Based on different types of terminals, correspondingly, the terminal may also search for the second record data in different implementation manners.

In a possible implementation manner, when the terminal can directly acquire the operation record of the file, the step of searching for second record data may include: first, searching for each operation record of operations performed on the file after the terminal last completed synchronization of the file; then, dividing or combining these operation records according to an operation path to obtain the second record data.

In another possible implementation manner, when the terminal cannot directly acquire the operation record of the file, the step of searching for second record data may include: first, reading directory information of the file that was obtained and stored after the terminal last completed synchronization of the file; then, comparing the directory information of the file that was obtained after the terminal last completed synchronization of the file with directory information of the file that is currently and locally stored in the terminal, so that the record of operations that were performed on the file after the terminal latest completes synchronization of the file can be obtained, where the operation record includes added data and/or deleted data, and the like, and the operation record is the second record data.

Step S303: The server searches for first record data.

In specific implementation, the first record data is an operation record, obtained from data of various versions of the file and sent by another terminal or a data management application to the server, which is generated for the file of the predetermined version due to various modification operations such as insertion, addition, deletion, and the like after the terminal completed the last synchronization of the file. Specifically, the foregoing predetermined version is determined by the file synchronization request sent by the terminal.

In a possible implementation manner, the file synchronization request may include a version number of the file that was last synchronized by the terminal and a latest version number for current synchronization. In this case, the first record data includes all operation records generated for the file of the predetermined version after the terminal last synchronized the file, where the predetermined version may b any version whose version number is from the version number of the file that was last synchronized by the terminal to the latest version number for the current synchronization (including the latest version number for the current synchronization). Specifically, the latest version number for the current synchronization may be the latest version number of the current file, or may be any version number that is later than the version number of the last synchronization, which may specifically depend on a current network status of the terminal.

In a possible implementation manner, the file synchronization request may include a version number of the file that was last synchronized by the terminal and a quantity threshold. In this case, the first record data may include a predetermined quantity of operation records successively generated for the file of the predetermined version after the terminal completed the last synchronization of the file, where a version number of the predetermined version is later than the version number of the file that was last synchronized by the terminal, and a value of the predetermined quantity is equal to the quantity threshold. In specific implementation, file data whose version number is later than the version number of the file that was last synchronized by the terminal may be first found from the data of the various versions of the file stored in the server; then starting from a time point at which the terminal completed the last synchronization of the file, the predetermined quantity (the value of the predetermined quantity is equal to the quantity threshold in the file synchronization request) of operation records are sorted out, in ascending order of operation time, from the found file data, and are used as the first record data.

Step S304: The server sends the first record data to the terminal.

In specific implementation, the first record data includes at least one operation record. In a possible implementation manner, if a network resource in an environment in which the terminal is located is sufficient, the server may directly send at least one found operation record to the terminal, so as to alleviate computing pressure on the server.

In another possible implementation manner, if the terminal is located in a mobile network environment or a congested network channel, before the first record data is sent to the terminal, the at least one operation record may be first divided or combined according to an operation path.

Step S305: The terminal determines an operation that should be performed.

In specific implementation, the terminal can obtain, by means of computing and with reference to the first record data and the second record data, the operation that should be performed in the current synchronization, for example, data that needs to be added, and data that needs to be deleted.

In a possible implementation manner, the first record data is multiple operation records that are found directly from data of various versions of the file by the server and have not undergone simplifying processing. In this case, the obtaining, according to the first record data and the second record data, the operation that should be performed by the terminal may include the following steps:

First, divide or combine the multiple operation records according to an operation path to simplify the first record data. Specifically, the dividing refers to dividing an operation record that involves multiple paths into multiple basic operation records that involve only one path, and the combining refers to combining multiple operation records that have a same operation path into a relatively small quantity of operation records.

Then, obtain, according to simplified first record data and the second record data, the operation that should be performed by the terminal, and perform the operation. In this case, if operation records in both the first record data and the second record data are basic operation records that involve only one operation path, the obtaining, according to the first record data and the second record data, an operation that should be performed by the terminal may be specifically: using the time point at which the terminal previously completed synchronization of the file as a start point; combining, in ascending order of operation time, operation records that are in the first record data and the second record data and have a same operation path; and obtaining, according to a combined operation record, the operation that should be performed by the terminal.

Step S306: The terminal performs the foregoing operation that should be performed.

Step S307: The terminal records a version number of the file for current synchronization, that is specifically, records a latest version number of the file in the first record data as a version number for the current synchronization of the file performed by the terminal.

Step S308: The terminal sends identification information of the terminal, the version number for the current synchronization of the file performed by the terminal, and a user identifier of the terminal to the server.

Step S309: The server updates, according to the identification information of the terminal, the version number for the current synchronization of the file performed by the terminal, and the user identifier of the terminal, a record of synchronization performed by a user on the terminal. In specific implementation, the record of synchronization performed by the user on the terminal may include the identification information of the terminal, the user identifier of the terminal, a synchronization time, a version number of the synchronization, and the like.

Step S310: The server queries for a version number of the file that was last synchronized by another terminal of the user.

Step S311: The server deletes a redundant operation record. Specifically, if the version number for the current synchronization of the file performed by the terminal is earlier than the version number of the file that was last synchronized by the another terminal of the user, an operation record generated before the file synchronization request was received is deleted from the data of the various versions of the file stored in the server, so as to reduce redundant storage on the server and alleviate storage pressure on the server.

In the file synchronization method described in FIG. 3, a server does not need to perform multiple interactions with a terminal and does not need to traverse a file directory in the server layer by layer, which can reduce a time consumed for synchronization; the terminal simplifies and then synchronizes an operation record, so as to reduce redundant data, further shorten the time consumed for synchronization, and improve synchronization efficiency.

Correspondingly, the present application further provides apparatus embodiments of a server and a terminal that may be configured to implement the method embodiments of the present application. The following uses examples to describe a structural composition of the server and the terminal in the present application with reference to the accompanying drawings.

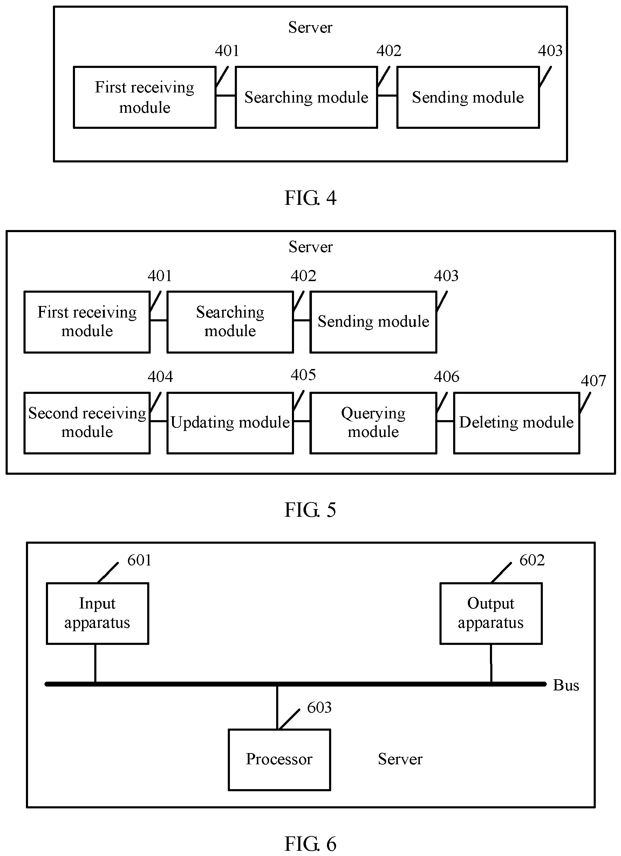

Referring to FIG. 4, FIG. 4 is a schematic diagram of a structure of an embodiment of a server according to the present application. As shown in FIG. 4, the server may include: a first receiving module 401, a searching module 402, and a sending module 403. In some possible implementation manners, the server may further include at least one of: a second receiving module 404, an updating module 405, a querying module 406, and a deleting module 407.

The first receiving module 401 is configured to receive a file synchronization request sent by a terminal.

The searching module 402 is configured to respond to the file synchronization request, and search data of various versions of a file stored in the server for first record data, where the first record data includes an operation record generated for the file of a predetermined version after the terminal last synchronized the file.

The sending module 403 is configured to send the first record data to the terminal, so that the terminal obtains, according to the first record data and second record data in the terminal, an operation that should be performed by the terminal, where the second record data includes an operation record of operations performed on the file after the terminal last synchronized the file.

In the present application, the server receives the file synchronization request sent by the terminal, where the file synchronization request may indicate a file that needs to be currently synchronized by the terminal, a time at which the terminal last synchronized the file, a version number of the file that was last synchronized by the terminal, and/or data (including a directory structure and/or an operation record, and the like) that needs to be provided by the server when the terminal currently synchronizes the file.

In specific implementation, the first record data is an operation record generated after the terminal last completed synchronization of the file, due to various modifying operations such as inserting, adding, and deleting, and by the file of the predetermined version from data of various versions of the file and sent by another terminal or a data management application to the server. Specifically, the foregoing predetermined version is determined by the file synchronization request sent by the terminal.

In a possible implementation manner, the file synchronization request may include a version number of the file that was last synchronized by the terminal and a latest version number for current synchronization. In this case, the first record data includes all operation records generated for the file of the predetermined version after the terminal last synchronized the file, where the predetermined version may be any version whose version number is from the version number of the file that was last synchronized by the terminal to the latest version number for the current synchronization (including the latest version number for the current synchronization). Specifically, the latest version number for the current synchronization may be the latest version number of the current file, or may be any version number that is later than a version number of last synchronization, which may specifically depend on a current network status of the terminal. For example, when a network resource of the terminal is sufficient (for example, in a state of a broadband network connection or a wireless network connection), the latest version number for the current synchronization may be the latest version number of the current file; when a network resource of the terminal is insufficient (for example, in a state of a mobile network connection), the latest version number for the current synchronization may be later than the version number of the file that was last synchronized by the terminal and earlier than the latest version number of the current file.

In a possible implementation manner, the file synchronization request may include the version number of the file that was last synchronized by the terminal and a quantity threshold. In this case, the first record data may include a predetermined quantity of operation records successively generated for the file of the predetermined version after the terminal last completed synchronization of the file, where a version number of the predetermined version is later than the version number of the file that was last synchronized by the terminal, and a value of the predetermined quantity is equal to the quantity threshold. In specific implementation, the searching module 402 may first find file data whose version number is later than the version number of the file that was last synchronized by the terminal from the data of the various versions of the file stored in the server; then use a time point at which the terminal last completed synchronization of the file as a start point; and sort out, in ascending order of operation time, the predetermined quantity (the value of the predetermined quantity is equal to the quantity threshold in the file synchronization request) of operation records from the found file data, and use the predetermined quantity of the operation records as the first record data.

In specific implementation, the first record data found by the searching module 402 includes at least one operation record.

In a possible implementation manner, if a network resource in an environment in which the terminal is located is sufficient, the sending module 403 may directly send at least one found operation record to the terminal, so as to alleviate computing pressure on the server.

In another possible implementation manner, if the terminal is located in a mobile network environment or a congested network channel, before the sending module 403 sends the first record data to the terminal, the at least one operation record may be first divided or combined according to an operation path. For example, "MOVE A, f1 to f2" may be divided into "DELETE A, f1" and "ADD A, f2", and "ADD B, f1", "ADD C, f1", and "DELETE B, f1" may be combined into "ADD C, f1".

The at least one operation record may be converted, by dividing the at least one operation record, into basic operation records of ADD or DELETE that involve only one path. Redundant data may be removed by combining, according to the operation path, these basic operation records obtained after the dividing, so as to visually present a final change of the file caused by the first record data. In this way, consumption of a network resource and a data transmission time can be reduced.

In a possible implementation manner, as shown in FIG. 5, the server may further include at least one of: the second receiving module 404, the updating module 405, the querying module 406, and the deleting module 407.

The second receiving module 404 is configured to receive identification information of the terminal, a version number for the current synchronization of the file performed by the terminal, and a user identifier of the terminal that are sent by the terminal.

The updating module 405 is configured to update, according to the identification information of the terminal, the version number for the current synchronization of the file performed by the terminal, and the user identifier of the terminal, a record of synchronization performed by a user on the terminal.

The querying module 406 is configured to query for a version number of the file that was last synchronized by another terminal of the user.

The deleting module 407 is configured to: if the version number for the current synchronization of the file performed by the terminal is earlier than the version number of the file that was last synchronized by the another terminal of the user, delete, from the data of the various versions of the file stored in the server, an operation record generated before the file synchronization request was received.

In specific implementation, the record of synchronization performed by the user on the terminal may include the identification information of the terminal, the user identifier of the terminal, a time and version number of synchronizing the file, and the like.

In specific implementation, after the synchronization is completed, if a version stored by the terminal is an earliest version of the file, an operation record that was generated, for the file stored in the server, before a time point at which the current synchronization started may be deleted, so as to reduce redundant storage on the server and alleviate storage pressure on the server.

In the server described in FIG. 4 or FIG. 5, after a first receiving module receives a file synchronization request sent by a terminal, a searching module searches data of various versions of a file stored in the server for an operation record generated for the file after the terminal previously synchronized the file. A sending module sends the operation record to the terminal, so that the server does not need to perform multiple interactions with the terminal. In addition, compared with an entire directory structure of the file, a data volume of the operation record is relatively small, which can not only reduce a transmission time but also reduce consumption of a network resource of a user. The terminal can obtain, with reference to the operation record sent by the server and an operation record of operations performed on the file after the terminal previously synchronized the file, an operation that should be performed, without a need for traversing a file directory in the server layer by layer or comparing the file directory in the server with a file directory in the terminal. In this way, a synchronization time can be effectively reduced, and synchronization efficiency can be improved.

Referring to FIG. 6, FIG. 6 is a schematic diagram of a structure of still another embodiment of a server according to the present application. As shown in FIG. 6, the server may include: an input apparatus 601, an output apparatus 602, and a processor 603. In some embodiments of the present application, the input apparatus 601 and the processor 603, and the output apparatus 602 and the processor 603 may be connected through a bus or another means, and a connection through a bus is used as an example in FIG. 6.

The input apparatus 601 is configured to receive a file synchronization request sent by a terminal.

The processor 603 is configured to respond to the file synchronization request, and search data of various versions of a file stored in the server for first record data, where the first record data includes an operation record generated for the file of a predetermined version after the terminal last synchronized the file.

The output apparatus 602 is configured to send the first record data to the terminal, so that the terminal obtains, according to the first record data and second record data in the terminal, an operation that should be performed by the terminal, where the second record data includes an operation record of operations performed on the file after the terminal last synchronized the file.

In a possible implementation manner, the file synchronization request includes a version number of the file that was last synchronized by the terminal and a latest version number for current synchronization. In this case, the first record data includes all operation records generated for the file of the predetermined version after the terminal last synchronized the file, where a version number of the predetermined version is later than the version number of the file that was last synchronized by the terminal and is earlier than or equal to the latest version number for the current synchronization.

In a possible implementation manner, the file synchronization request includes a version number of the file that was last synchronized by the terminal and a quantity threshold. In this case, the first record data includes a predetermined quantity of operation records successively generated for the file of the predetermined version after the terminal last synchronized the file, where a version number of the predetermined version is later than the version number of the file that was last synchronized by the terminal, and a value of the predetermined quantity is equal to the quantity threshold.

In a possible implementation manner, the first record data includes at least one operation record. In this case, before the output apparatus 602 sends the first record data to the terminal, the at least one operation record may be first divided or combined according to an operation path and then is sent to the terminal.

In a possible implementation manner, the input apparatus 601 is further configured to receive identification information of the terminal, a version number for the current synchronization of the file performed by the terminal, and a user identifier of the terminal that are sent by the terminal.

The processor 603 is further configured to:
update, according to the identification information of the terminal, the version number for the current synchronization of the file performed by the terminal, and the user identifier of the terminal, a record of synchronization performed by a user on the terminal;
query for a version number of the file that was last synchronized by another terminal of the user; and
if the version number for the current synchronization of the file performed by the terminal is earlier than the version number of the file that was last synchronized by the another terminal of the user, delete, from the data of the various versions of the file stored in the server, an operation record generated before the file synchronization request was received.

In the server described in FIG. 6, the server does not need to perform multiple interactions with a terminal and does not need to traverse a file directory in the server layer by layer or compare the file directory in the server with a file directory in the terminal. In addition, compared with an entire directory structure of a file, a data volume of an operation record generated after the terminal latest synchronizes the file is relatively small, which not only shortens a data transmission time during synchronization but also can reduce consumption of a network resource of a user, thereby improving synchronization efficiency.

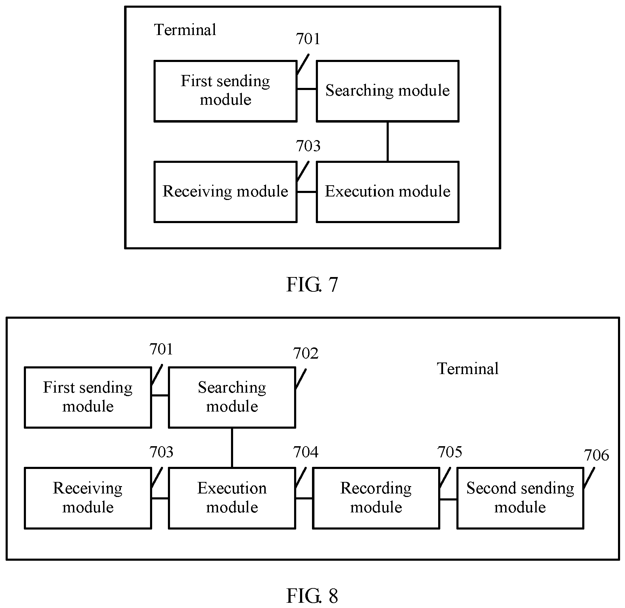

Referring to FIG. 7, FIG. 7 is a schematic diagram of a structure of an embodiment of a terminal according to the present application. As shown in FIG. 7, the terminal may include: a first sending module 701, a searching module 702, a receiving module 703, and an execution module 704.

The first sending module 701 is configured to send a file synchronization request to a server.

The searching module 702 is configured to search for second record data, where the second record data includes an operation record of operations performed on a file after the terminal last synchronized the file.

The receiving module 703 is configured to receive first record data sent after the server responds to the file synchronization request, where the first record data includes an operation record generated, for the file of a predetermined version, from data of various versions of the file stored in the server, after the terminal last synchronized the file.

The execution module 704 is configured to obtain, according to the first record data and the second record data, an operation that should be performed by the terminal, and perform the operation.

In the present application, the terminal sends the file synchronization request to the server, where the file synchronization request may indicate a file that needs to be currently synchronized by the terminal, a time at which the terminal last synchronized the file, a version number of the file that was last synchronized by the terminal, and/or data (including a directory structure and/or an operation record and the like) that needs to be provided by the server when the file is currently synchronized.

In the present application, the terminal may include two types: One type is a terminal that can directly acquire an operation record of the file, where the terminal of this type generally includes an input apparatus and a processor and can independently perform an operation on a file, for example, a computer and a tablet computer; the other one is a terminal that cannot directly acquire an operation record of a file, for example, a USB flash drive for synchronization.

Based on different types of terminals, correspondingly, the searching module 702 may also search for the second record data in different implementation manners.

In a possible implementation manner, when the terminal can directly obtain the operation record of the file, the searching module 702 may further include the following units (not shown in the figure):
a searching unit, configured to search for each operation record of operations performed on the file after the terminal last synchronized the file.

The second record data is obtained by dividing or combining these operation records according to an operation path.

Specifically, the dividing refers to dividing an operation record that involves multiple paths into multiple basic operation records that involve only one path. For example, "MOVE A, f1 to f2" may be divided into "DELETE A, f1" and "ADD A, f2". The combining refers to combining multiple operation records that have a same operation path into a relatively small quantity of operation records. For example, "ADD B, f1", "ADD C, f1", and "DELETE B, f1" may be combined into "ADD C, f1". The division and combination operations can simplify data required during synchronization and remove redundant data, so as to shorten a synchronization time and improve synchronization efficiency.

In another possible implementation manner, when the terminal cannot directly acquire an operation record of a file, the step of searching for second record data by the searching module 702 may include: first, reading directory information of the file that was obtained and stored after the terminal last completed synchronization of the file; then, comparing the directory information of the file that was obtained after the terminal last completed synchronization of the file with directory information of the file that is currently and locally stored in the terminal, so that the record of operations that were performed on the file after the terminal last completed synchronization of the file can be obtained, where the operation record includes added data and/or deleted data, and the like, and the operation record is the second record data.

In specific implementation, based on different content of the file synchronization request, correspondingly, the first record data may also have several different cases.

In a possible implementation manner, the file synchronization request may include a version number of the file that was last synchronized by the terminal and a latest version number for current synchronization. In this case, the first record data includes all operation records generated for the file of the predetermined version after the terminal last synchronized the file, where the predetermined version may be any version whose version number is from the version number of the file that was last synchronized by the terminal to the latest version number for the current synchronization (including the latest version number for the current synchronization). Specifically, the latest version number for the current synchronization may be the latest version number of the current file, or may be any version number that is later than the version number of the last synchronization, which may specifically depend on a current network status of the terminal.

In a possible implementation manner, the file synchronization request may include the version number of the file that was last synchronized by the terminal and a quantity threshold. In this case, the first record data may include a predetermined quantity of operation records successively generated for the file of the predetermined version after the terminal last synchronized the file, where a version number of the predetermined version is later than the version number of the file that was last synchronized by the terminal, and a value of the predetermined quantity is equal to the quantity threshold.

In specific implementation, the execution module 704 may obtain, by means of computing and with reference to the operation record generated, after a time point at which the terminal last completed synchronization of the file, for the file that is of the predetermined version and stored in the server, and the operation record of operations performed on the file by the terminal, the operation that needs to be performed during current synchronization, for example, data that needs to be added, and data that needs to be deleted.

In a possible implementation manner, the first record data sent by the server is multiple operation records that are directly found from data of various versions of the file by the server and have not undergone simplifying processing. In this case, the execution module 704 may include the following units (not shown in the figure): a second record simplifying unit and an execution unit.

The second record simplifying unit is configured to divide or combine the multiple operation records according to an operation path to simplify the first record data. Specifically, the dividing refers to dividing an operation record that involves multiple paths into multiple basic operation records that involve only one path, and the combining refers to combining multiple operation records that have a same operation path into a relatively small quantity of operation records. The division and combination operations can simplify data required during synchronization and remove redundant data, so as to shorten a synchronization time and improve synchronization efficiency.

The execution unit is configured to obtain, according to simplified first record data and the second record data, an operation that should be performed by the terminal, and perform the operation. In this case, if operation records in both the first record data and the second record data are basic operation records that involve only one operation path, the obtaining, according to the first record data and the second record data, the operation that should be performed by the terminal may be specifically: using the time point at which the terminal previously completes synchronization of the file as a start point; combining, in ascending order of operation time, operation records that are in the first record data and the second record data and have a same operation path; and obtaining, according to a combined operation record, the operation that should be performed by the terminal. For example, operation records whose operation paths are disk 1 (f1) are "ADD A, f1", "ADD B, f1", "ADD C, f1", and "DELETE B, f1", and the foregoing four operation records may be combined into "ADD AB, f1"; then, the operation that should be performed by the terminal is adding "AB" to the disk 1.

In some possible implementation manners, as shown in FIG. 8, the terminal may further include at least one of: a recording module 705 and a second sending module 706.

The recording module 705 is configured to record, after the execution module 704 obtains the operation that should be performed by the terminal and performs the operation, a latest version number of the file in the first record data as a version number for current synchronization of the file performed by the terminal.

The second sending module 706 is configured to send identification information of the terminal, the version number for the current synchronization of the file performed by the terminal, and a user identifier of the terminal to the server, so that the server updates a record of synchronization performed by a user on the terminal. In specific implementation, the record of synchronization performed by the user on the terminal may include the identification information of the terminal, the user identifier of the terminal, a time and version number of synchronizing the file, and the like.

In the terminal described in FIG. 7 or FIG. 8, a first sending module sends a file synchronization request to a server; a searching module searches for an operation record of operations performed on a file after the terminal previously completed synchronization of the file and uses the operation record as second record data; a receiving module receives first record data sent by the server, so that the terminal does not need to perform multiple interactions with the server and does not need to traverse a file directory in the server layer by layer. In addition, the first record data includes some operation records, and compared with an entire directory structure of the file, a data volume is relatively small, which not only reduces a transmission time but also can reduce consumption of a network resource of a user. Before obtaining, according to the first record data and the second record data, an operation that should be performed by the terminal, an execution module may first divide and combine the first record data, so as to reduce redundant data and a computing amount during synchronization, thereby alleviating computing pressure on the terminal and improving synchronization efficiency.

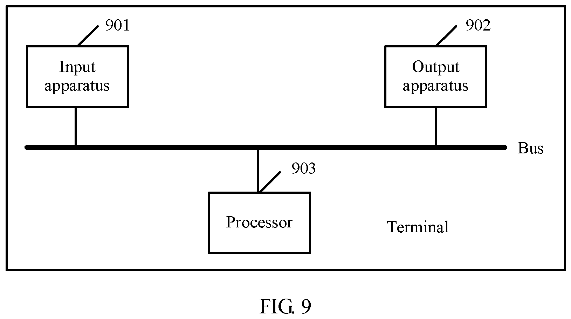

Referring to FIG. 9, FIG. 9 is a schematic diagram of a structure of still another embodiment of a terminal according to the present application. As shown in FIG. 9, the terminal may include: an input apparatus 901, an output apparatus 902, and a processor 903. In some embodiments of the present application, the input apparatus 901 and the processor 903, and the output apparatus 902 and the processor 903 may be connected through a bus or another means, and a connection through a bus is used as an example in FIG. 9.

The output apparatus 902 is configured to send a file synchronization request to a server.

The input apparatus 901 is configured to receive first record data sent after the server responds to the file synchronization request, where the first record data includes an operation record generated, for a file of a predetermined version, from data of various versions of the file stored in the server, after the terminal last synchronized the file.

The processor 903 is configured to:
search for second record data, where the second record data includes an operation record of operations performed on the file after the terminal last synchronized the file; and
obtain, according to the first record data and the second record data, an operation that should be performed by the terminal, and perform the operation.

In a possible implementation manner, when the processor 903 searches for the second record data, specific steps are as follows:
searching for each operation record of operations performed on the file after the terminal last synchronized the file; and
dividing or combining each operation record according to an operation path to obtain the second record data.

In a possible implementation manner, the first record data includes at least one operation record.

When the processor obtains, according to the first record data and the second record data, the operation that should be performed by the terminal, and performs the operation, specific steps are as follows:
dividing or combining the at least one operation record according to an operation path to simplify the first record data; and
obtaining, according to simplified first record data and the second record data, the operation that should be performed by the terminal, and performing the operation.

In a possible implementation manner, the processor 903 is further configured to record a latest version number of the file in the first record data as a version number for current synchronization of the file performed by the terminal.

The output apparatus 902 is further configured to send identification information of the terminal, the version number for the current synchronization of the file performed by the terminal, and a user identifier of the terminal to the server, so that the server updates a record of synchronization performed by a user on the terminal.

In the terminal described in FIG. 9, the terminal does not need to perform multiple interactions with a server and does not need to traverse a file directory in the server layer by layer or compare the file directory in the server with a file directory in the terminal. In addition, compared with an entire directory structure of the file, a data volume of an operation record generated after the terminal latest synchronizes the file is relatively small, which not only shortens a data transmission time during synchronization but also can reduce consumption of a network resource of a user, thereby improving synchronization efficiency.

It should be noted that, for brief description, the foregoing method embodiments are represented as a series of actions. However, a person skilled in the art should appreciate that the present application is not limited to the described order of the actions, because according to the present application, some steps may be performed in other orders or simultaneously. It should be further appreciated by a person skilled in the art that the embodiments described in this specification all belong to exemplary embodiments, and the involved actions and modules are not necessarily required by the present application.

In the foregoing embodiments, the description of each embodiment has respective focuses. For a part that is not described in detail in an embodiment, reference may be made to related descriptions in other embodiments.

A person of ordinary skill in the art may understand that all or some of the steps of the methods in the embodiments may be implemented by a program instructing relevant hardware. The program may be stored in a computer readable storage medium. The storage medium may include a flash memory, a read-only memory (Read-Only Memory, ROM), a random access memory (Random Access Memory, RAM), a magnetic disk, and an optical disc.

The foregoing describes a file synchronization method, a server, and a terminal in detail according to the embodiments of the present application. In this specification, specific examples are used to describe the principle and implementation manners of the present application, and the description of the embodiments is only intended to help understand the method and core idea of the present application. In addition, a person of ordinary skill in the art may, based on the idea of the present application, make modifications with respect to the specific implementation manners and the application scope. Therefore, the content of this specification shall not be construed as a limitation to the present application.

The disclosure of the present invention also includes the following Examples:
Example 1: A computer storage medium, wherein
   the computer storage medium stores a program, wherein the program performs the method steps according to the invention.
Example 2: A server, comprising: an input apparatus, an output apparatus, and a processor, wherein the input apparatus, the output apparatus, and the processor are connected through a bus, wherein:
   the input apparatus is configured to receive a file synchronization request sent by a terminal;
   the processor responds to the file synchronization request, and searches data of various versions of a file stored in the server for first record data, wherein the first record data comprises an operation record generated for the file of a predetermined version after the terminal last synchronized the file; and
   the output apparatus is configured to send the first record data to the terminal, so that the terminal obtains, according to the first record data and second record data in the terminal, an operation that should be performed by the terminal, wherein the second record data comprises an operation record performed on the file after the terminal last synchronized the file.

Example 3: The server according to Example 2, wherein the file synchronization request comprises a version number of the file that was last synchronized by the terminal and a latest version number for current synchronization; and
the first record data comprises all operation records generated for the file of the predetermined version after the terminal last synchronized the file, wherein a version number of the predetermined version is later than the version number of the file that was last synchronized by the terminal and is earlier than or equal to the latest version number for the current synchronization.

Example 4: The server according to Example 2, wherein the file synchronization request comprises a version number of the file that was last synchronized by the terminal and a quantity threshold; and
the first record data comprises a predetermined quantity of operation records successively generated for the file of the predetermined version after the terminal last synchronized the file, wherein a version number of the predetermined version is later than the version number of the file that was last synchronized by the terminal, and a value of the predetermined quantity is equal to the quantity threshold.

Example 5: The server according to any one of Examples 2 to 4, wherein
the input apparatus is further configured to receive identification information of the terminal, a version number for the current synchronization of the file performed by the terminal, and a user identifier of the terminal that are sent by the terminal; and
the processor is further configured to:
update, according to the identification information of the terminal, the version number for the current synchronization of the file performed by the terminal, and the user identifier of the terminal, a record of synchronization performed by a user on the terminal;
query for a version number of the file that was last synchronized by another terminal of the user; and
if the version number for the current synchronization of the file performed by the terminal is earlier than the version number of the file that was last synchronized by the another terminal of the user, delete, from the data of the various versions of the file stored in the server, an operation record generated before the file synchronization request was received.
Example 6: A terminal, comprising:
   a first sending module, configured to send a file synchronization request to a server;
   a searching module, configured to search for second record data, wherein the second record data comprises an operation record of operations performed on a file after the terminal last synchronized the file;
   a receiving module, configured to receive first record data sent after the server responds to the file synchronization request, wherein the first record data comprises an operation record generated, for the file of a predetermined version, in data of various versions of the file stored in the server, after the terminal last synchronized the file; and
   an execution module, configured to obtain, according to the first record data and the second record data, an operation that should be performed by the terminal, and perform the operation,
   wherein the terminal further comprises:
      a recording module, configured to record a latest version number of the file in the first record data as a version number for current synchronization of the file performed by the terminal; and
      a second sending module, configured to send identification information of the terminal, the version number for the current synchronization of the file performed by the terminal, and a user identifier of the terminal to the server, so that the server updates a record of synchronization performed by a user on the terminal.
Example 7: A terminal, comprising: an input apparatus, an output apparatus, and a processor, wherein the input apparatus, the output apparatus, and the processor are connected through a bus, wherein:
   the output apparatus is configured to send a file synchronization request to a server;
   the input apparatus is configured to receive first record data sent after the server responds to the file synchronization request, wherein the first record data comprises an operation record generated, for a file of a predetermined version, in data of various versions of the file stored in the server, after the terminal last synchronized the file; and
   the processor is configured to:
      search for second record data, wherein the second record data comprises an operation record performed on the file after the terminal last synchronized the file; and
      obtain, according to the first record data and the second record data, an operation that should be performed by the terminal, and perform the operation.
Example 8: The terminal of Example 7, wherein when the processor searches for the second record data, specific steps are as follows:
   searching for each operation record performed on the file after the terminal last synchronized the file; and
   dividing or combining each operation record according to an operation path to obtain the second record data.
Example 9: The terminal of Example 7, wherein the first record data comprises at least one operation record; and
   when the processor obtains, according to the first record data and the second record data, the operation that should be performed by the terminal, and performs the operation, specific steps are as follows:
   dividing or combining the at least one operation record according to an operation path to simplify the first record data; and
   obtaining, according to simplified first record data and the second record data, the operation that should be performed by the terminal, and performing the operation.
Example 10: The terminal of any one of Examples 7 to 9, wherein
   the processor is further configured to record a latest version number of the file in the first record data as a version number for current synchronization of the file performed by the terminal; and
   the output apparatus is further configured to send identification information of the terminal, the version number for the current synchronization of the file performed by the terminal, and a user identifier of the terminal to the server, so that the server updates a record of synchronization performed by a user on the terminal.

## Claims

1. A file synchronization method, comprising:
receiving (S101) a file synchronization request sent by a terminal to a server;
responding (SI02) to the file synchronization request by searching data of various versions of the file that needs to be currently synchronized by the terminal, and is stored in the server for a first record data, wherein the first record data comprises an operation record generated for the file of a predetermined version after the terminal last synchronized the file; and
sending (S103) the first record data to the terminal, so that the terminal obtains, according to the first record data and a second record data in the terminal, an operation that should be performed by the terminal, wherein the second record data comprises an operation record of operations performed on the file after the terminal last synchronized the file,
**characterized in that**
before the first record data is sent to the terminal, the operation record is divided by converting it into basic operation records of ADD or DELETE that involve only one operation path, and the basic operation records obtained after division are combined according to the operation path, so as to remove redundant data and present a simplified final change of the file caused by the first record data.

2. The method according to claim 1, wherein the file synchronization request comprises a version number of the file that was last synchronized by the terminal and a latest version number for current synchronization; and
the first record data comprises all operation records generated for the file of the predetermined version after the terminal last synchronized the file, wherein a version number of the predetermined version is later than the version number of the file that was last synchronized by the terminal and is earlier than or equal to the latest version number for the current synchronization.

3. The method according to claim 1, wherein the file synchronization request comprises a version number of the file that was last synchronized by the terminal and a quantity threshold; and
the first record data comprises a predetermined quantity of operation records successively generated for the file of the predetermined version after the terminal last synchronized the file, wherein a version number of the predetermined version is later than the version number of the file that was last synchronized by the terminal, and a value of the predetermined quantity is equal to the quantity threshold.

4. The method according to any one of claims 1 to 3, wherein after the sending the first record data to the terminal, the method further comprises:
receiving identification information of the terminal, a version number for the current synchronization of the file performed by the terminal, and a user identifier of the terminal that are sent by the terminal;
updating, according to the identification information of the terminal, the version number for the current synchronization of the file performed by the terminal, and the user identifier of the terminal, a record of synchronization performed by a user on the terminal;
querying for a version number of the file that was last synchronized by another terminal of the user; and
if the version number for the current synchronization of the file performed by the terminal is earlier than the version number of the file that was last synchronized by the another terminal of the user, deleting, from the data of the various versions of the file stored in the server, an operation record generated before the file synchronization request was received,

5. A file synchronization method, comprising:
sending (S201) a file synchronization request by a terminal to a server;
searching (S202) for a second record data, wherein the second record data comprises an operation record of operations performed on the file that needs to be currently synchronized, after the terminal last synchronized the file;
receiving (S203) a first record data sent as the server response to the file synchronization request, wherein the first record data comprises an operation record generated, for the file of a predetermined version, in data of various versions of the file stored in the server, after the terminal last synchronized the file; and
obtaining (S204), according to the first record data and the second record data, an operation that should be performed by the terminal, and performing the operation,
**characterized in that**
the method further comprises searching for each operation record of operations performed on the file after the terminal last synchronized the file;
the first record data and the second record data are simplified by: dividing the
operation record therein by converting it into basic operation records of ADD or DELETE that involve only one path, and combining the basic operation records obtained after division according to the operation path, so as to remove redundant data and present a simplified final change of the file caused by the first and second record data; and
the obtaining (S204) an operation that should be performed by the terminal is specifically: using the time point at which the terminal previously completed synchronization of the file as a start point; combining, in ascending order of operation time, operation records that are in the first record data and the second record data and have a same operation path; and obtaining, according to a combined operation record, the operation that should be performed by the terminal.

6. The method according to claim 5, wherein after the obtaining, according to the first record data and the second record data, an operation that should be performed by the terminal, and performing the operation, the method further comprises:
recording a latest version number of the file in the first record data as a version number for current synchronization of the file performed by the terminal; and
sending identification information of the terminal, the version number for the current synchronization of the file performed by the terminal, and a user identifier of the terminal to the server, so that the server updates a record of synchronization performed by a user on the terminal.

7. A server, comprising:
a first receiving module (401), configured to receive a file synchronization request sent by a terminal;
a searching module (402), configured to respond to the file synchronization request by searching data of various versions of the file that needs to be currently synchronized by the terminal and is stored in the server for a first record data, wherein the first record data comprises an operation record generated for the file of a predetermined version after the terminal last synchronized the file; and
a sending module (403), configured to send the first record data to the terminal, so that the terminal obtains, according to the first record data and a second record data in the terminal, an operation that should be performed by the terminal, wherein the second record data comprises an operation record of operations performed on the file after the terminal last synchronized the file,
**characterized in that**
the server is configured to: before the sending module (403) sends the first record data to the terminal, divide the operation record by converting it into basic operation records of ADD or DELETE that involve only one operation path, and combine the basic operation records obtained after division according to the operation path, so as to remove redundant data and present a simplified final change of the file caused by the first record data.

8. The server according to claim 7, wherein the file synchronization request comprises a version number of the file that was last synchronized by the terminal and a latest version number for current synchronization; and
the first record data comprises all operation records generated for the file of the predetermined version after the terminal last synchronized the file, wherein a version number of the predetermined version is later than the version number of the file that was last synchronized by the terminal and is earlier than or equal to the latest version number for the current synchronization.

9. The server according to claim 7, wherein the file synchronization request comprises a version number of the file that was last synchronized by the terminal and a quantity threshold; and
the first record data comprises a predetermined quantity of operation records successively generated for the file of the predetermined version after the terminal last synchronized the file, wherein a version number of the predetermined version is later than the version number of the file that was last synchronized by the terminal, and a value of the predetermined quantity is equal to the quantity threshold.

10. The server according to any one of claims 7 to 9, wherein the server further comprises:
a second receiving module (404), configured to receive identification information of the terminal, a version number for the current synchronization of the file performed by the terminal, and a user identifier of the terminal that are sent by the terminal;
an updating module (405), configured to update, according to the identification information of the terminal, the version number for the current synchronization of the file performed by the terminal, and the user identifier of the terminal, a record of synchronization performed by a user on the terminal;
a querying module (406), configured to query for a version number of the file that was last synchronized by another terminal of the user; and
a deleting module (407), configured to: if the version number for the current synchronization of the file performed by the terminal is earlier than the version number of the file that was last synchronized by the another terminal of the user, delete, from the data that is of the various versions of the file and stored in the server, an operation record generated before the file synchronization request is received.

11. A terminal, comprising:
a first sending module (701), configured to send a file synchronization request to a server;
a searching module (702), configured to search for a second record data, wherein
the second record data comprises an operation record of operations performed on the file that needs to be currently synchronized, after the terminal last synchronized the file;
a receiving module (703), configured to receive a first record data sent as the server response to the file synchronization request, wherein the first record data comprises an operation record generated, for the file of a predetermined version, in data of various versions of the file stored in the server, after the terminal last synchronized the file; and
an execution module (704), configured to obtain, according to the first record data and the second record data, an operation that should be performed by the terminal, and perform the operation,
**characterized in that**
the searching module (702) includes a searching unit, configured to search for each operation record of operations performed on the file after the terminal last synchronized the file, and
the execution module (704) includes a record simplifying unit that is configured to simplify the first record data and the second record data by: dividing the operation record therein by converting it into basic operation records of ADD or DELETE that involve only one operation path, and combining the basic operation records obtained after division according to the operation path, so as to remove redundant data and present a simplified final change of the file caused by the first and second record data; and
the execution module (704) is configured to obtain the operation that should be performed by the terminal by: using the time point at which the terminal previously completed synchronization of the file as a start point; combining, in ascending order of operation time, operation records that are in the first record data and the second record data and have a same operation path; and obtaining, according to a combined operation record, the operation that should be performed by the terminal.

12. The terminal according to claim 11, wherein the searching module comprises:
a first simplifying unit, configured to divide or combine each operation record according to an operation path to obtain the second record data.

13. The terminal according to claim 11, wherein the first record data comprises at least one operation record; and
the execution module comprises:
a second simplifying unit, configured to divide or combine the at least one operation record according to an operation path to simplify the first record data; and
an execution unit, configured to obtain, according to simplified first record data and the second record data, the operation that should be performed by the terminal, and perform the operation.

## Patentansprüche

1. Dateisynchronisationsverfahren, umfassend:
Empfangen (S101) einer Dateisynchronisationsanforderung, die durch ein Endgerät zu einem Server gesendet wird;
Reagieren (S102) auf die Datensynchronisationsanforderung, indem Daten verschiedener Versionen der Datei, die aktuell durch das Endgerät synchronisiert werden muss und im Server gespeichert ist, nach ersten Datensatzdaten durchsucht werden, wobei die ersten Datensatzdaten einen Operationsdatensatz umfassen, der für die Datei einer vorbestimmten Version erzeugt wird, nachdem das Endgerät die Datei zuletzt synchronisierte; und
Senden (S103) der ersten Datensatzdaten zum Endgerät, sodass das Endgerät, gemäß den ersten Datensatzdaten und zweiten Datensatzdaten im Endgerät, eine Operation erhält, die durch das Endgerät durchgeführt werden sollte, wobei die zweiten Datensatzdaten einen Operationsdatensatz von Operationen umfasst, die an der Datei durchgeführt werden, nachdem das Endgerät die Datei zuletzt synchronisierte,
**dadurch gekennzeichnet, dass,**
bevor die ersten Datensatzdaten zum Endgerät gesendet werden, der Operationsdatensatz unterteilt wird, indem er in grundlegende Operationsdatensätze von HINZUFÜGEN oder LÖSCHEN, die nur einen Operationspfad erfordern, umgewandelt wird und die grundlegenden Operationsdatensätze, die nach der Unterteilung erhalten werden, gemäß dem Operationspfad kombiniert werden, damit redundante Daten entfernt werden und eine vereinfachte finale Änderung der Datei, die durch die ersten Datensatzdaten bewirkt wird, dargelegt wird.

2. Verfahren nach Anspruch 1, wobei die Dateisynchronisationsanforderung eine Versionsnummer der Datei, die zuletzt durch das Endgerät synchronisiert wurde, und eine jüngste Versionsnummer für die aktuelle Synchronisation umfasst und
die ersten Datensatzdaten alle Operationsdatensätze umfasst, die für die Datei der vorbestimmten Version erzeugt werden, nachdem das Endgerät die Datei zuletzt synchronisierte, wobei eine Versionsnummer der vorbestimmten Version später ist als die Versionsnummer der Datei, die zuletzt durch das Endgerät synchronisiert wurde, und früher oder gleich der jüngsten Versionsnummer für die aktuelle Synchronisation ist.

3. Verfahren nach Anspruch 1, wobei die Dateisynchronisationsanforderung eine Versionsnummer der Datei, die zuletzt durch das Endgerät synchronisiert wurde, und eine Mengenschwelle umfasst und
die ersten Datensatzdaten eine vorbestimmte Menge von Operationsdatensätzen umfasst, die sukzessive für die Datei der vorbestimmten Version erzeugt werden, nachdem das Endgerät die Datei zuletzt synchronisierte, wobei eine Versionsnummer der vorbestimmten Version später als die Versionsnummer der Datei ist, die zuletzt durch das Endgerät synchronisiert wurde, und ein Wert der vorbestimmten Menge gleich der Mengenschwelle ist.

4. Verfahren nach einem der Ansprüche 1 bis 3, wobei das Verfahren nach dem Senden der ersten Datensatzdaten zum Endgerät ferner Folgendes umfasst:
Empfangen von Identifikationsinformationen des Endgeräts, einer Versionsnummer für die aktuelle Synchronisation der Datei, die durch das Endgerät durchgeführt wird, und einer Benutzerkennung des Endgeräts, die durch das Endgerät gesendet werden;
Aktualisieren, gemäß den Identifikationsinformationen des Endgeräts, der Versionsnummer für die aktuelle Synchronisation der Datei, die durch das Endgerät durchgeführt wird, und der Benutzerkennung des Endgeräts, eines Datensatzes einer Synchronisation, die durch einen Benutzer am Endgerät durchgeführt wird;
Abfragen einer Versionsnummer der Datei, die zuletzt durch ein anderes Endgerät des Benutzers synchronisiert wurde; und,
falls die Versionsnummer für die aktuelle Synchronisation der Datei, die durch das Endgerät durchgeführt wird, früher als die Versionsnummer der Datei ist, die zuletzt durch das andere Endgerät des Benutzers synchronisiert wurde, Löschen, aus den Daten der verschiedenen Versionen der Datei, die im Server gespeichert ist, eines Operationsdatensatzes, der erzeugt wird, bevor die Dateisynchronisationsanforderung empfangen wurde.

5. Dateisynchronisationsverfahren, umfassend:
Senden (S201) einer Dateisynchronisationsanforderung durch ein Endgerät zu einem Server;
Suchen (S202) nach zweiten Datensatzdaten, wobei die zweiten Datensatzdaten einen Operationsdatensatz von Operationen umfassen, die an der Datei durchgeführt werden, die aktuell synchronisiert werden muss, nachdem das Endgerät die Datei zuletzt synchronisierte;
Empfangen (S203) von ersten Datensatzdaten, die als die Serverreaktion auf die Dateisynchronisationsanforderung gesendet werden, wobei die ersten Datensatzdaten einen Operationsdatensatz umfassen, der, für die Datei einer vorbestimmten Version,
in Daten verschiedener Versionen der Datei, die im Server gespeichert ist, erzeugt wird, nachdem das Endgerät die Datei zuletzt synchronisierte; und
Erhalten (S204), gemäß den ersten Datensatzdaten und den zweiten Datensatzdaten, einer Operation, die durch das Endgerät durchgeführt werden sollte, und Durchführen der Operation,
**dadurch gekennzeichnet, dass**
das Verfahren ferner Suchen nach jedem Operationsdatensatz von Operationen umfasst, die an der Datei durchgeführt werden, nachdem das Endgerät die Datei zuletzt synchronisierte;
die ersten Datensatzdaten und die zweiten Datensatzdaten durch Folgendes vereinfacht werden: Unterteilen des Operationsdatensatzes darin, indem er in grundlegende Operationsdatensätze von HINZUFÜGEN oder LÖSCHEN, die nur einen Pfad erfordern, umgewandelt wird und Kombinieren der grundlegenden Operationsdatensätze, die nach der Unterteilung erhalten werden, gemäß dem Operationspfad, damit redundante Daten entfernt werden und eine vereinfachte finale Änderung der Datei, die durch die ersten und die zweiten Datensatzdaten bewirkt wird, dargelegt wird; und
das Erhalten (S204) einer Operation, die durch das Endgerät durchgeführt werden sollte, spezifisch Folgendes ist: Verwenden des Zeitpunkts, zu dem das Endgerät zuvor eine Synchronisation der Datei beendete, als einen Startpunkt; Kombinieren, in aufsteigender Reihenfolge der Operationszeit, von Operationsdatensätzen, die sich in den ersten Datensatzdaten und den zweiten Datensatzdaten befinden und denselben Operationspfad aufweisen; und Erhalten, gemäß einem kombinierten Operationsdatensatz, der Operation, die durch das Endgerät durchgeführt werden sollte.

6. Verfahren nach Anspruch 5, wobei das Verfahren nach dem Erhalten, gemäß den ersten Datensatzdaten und den zweiten Datensatzdaten, einer Operation, die durch das Endgerät durchgeführt werden sollte, und dem Durchführen der Operation ferner Folgendes umfasst:
Aufzeichnen einer jüngsten Versionsnummer der Datei in den ersten Datensatzdaten als eine Versionsnummer für eine aktuelle Synchronisation der Datei, die durch das Endgerät durchgeführt wird; und
Senden von Identifikationsinformationen des Endgeräts, der Versionsnummer für die aktuelle Synchronisation der Datei, die durch das Endgerät durchgeführt wird, und einer Benutzerkennung des Endgeräts zum Server, sodass der Server einen Datensatz einer Synchronisation, die durch einen Benutzer am Endgerät durchgeführt wird, aktualisiert.

7. Server, umfassend:
ein erstes Empfangsmodul (401), das konfiguriert ist zum Empfangen einer Dateisynchronisationsanforderung, die durch ein Endgerät gesendet wird;
ein Suchmodul (402) das konfiguriert ist zum Reagieren auf die Dateisynchronisationsanforderung, indem Daten verschiedener Versionen der Datei, die aktuell durch das Endgerät synchronisiert werden muss und im Server gespeichert ist, nach ersten Datensatzdaten durchsucht werden, wobei die ersten Datensatzdaten einen Operationsdatensatz umfassen, der für die Datei einer vorbestimmten Version erzeugt wird, nachdem das Endgerät die Datei zuletzt synchronisierte; und
ein Sendemodul (403), das konfiguriert ist zum Senden der ersten Datensatzdaten zum Endgerät, sodass das Endgerät, gemäß den ersten Datensatzdaten und zweiten Datensatzdaten im Endgerät, eine Operation erhält, die durch das Endgerät durchgeführt werden sollte, wobei die zweiten Datensatzdaten einen Operationsdatensatz von Operationen umfassen, die an der Datei durchgeführt werden, nachdem das Endgerät die Datei zuletzt synchronisierte,
**dadurch gekennzeichnet, dass**
der Server zu Folgendem konfiguriert ist: bevor das Sendemodul (403) die ersten Datensatzdaten zum Endgerät sendet, Unterteilen des Operationsdatensatzes, indem er in grundlegende Operationsdatensätze von HINZUFÜGEN oder LÖSCHEN, die nur einen Operationspfad erfordern, umgewandelt wird, und Kombinieren der grundlegenden Operationsdatensätze, die nach der Unterteilung erhalten werden, gemäß dem Operationspfad, damit redundante Daten entfernt werden und eine vereinfachte finale Änderung der Datei, die durch die ersten Datensatzdaten bewirkt wird, dargelegt wird.

8. Server nach Anspruch 7, wobei die Dateisynchronisationsanforderung eine Versionsnummer der Datei, die zuletzt durch das Endgerät synchronisiert wurde, und eine jüngste Versionsnummer für eine aktuelle Synchronisation umfasst und
die ersten Datensatzdaten alle Operationsdatensätze umfassen, die für die Datei der vorbestimmten Version erzeugt werden, nachdem das Endgerät die Datei zuletzt synchronisierte, wobei eine Versionsnummer der vorbestimmten Version später als die Versionsnummer der Datei ist, die zuletzt durch das Endgerät synchronisiert wurde, und früher oder gleich der jüngsten Versionsnummer für die aktuelle Synchronisation ist.

9. Server nach Anspruch 7, wobei die Dateisynchronisationsanforderung eine Versionsnummer der Datei, die zuletzt durch das Endgerät synchronisiert wurde, und eine Mengenschwelle umfasst und
die ersten Datensatzdaten eine vorbestimmte Menge von Operationsdatensätzen umfasst, die sukzessive für die Datei der vorbestimmten Version erzeugt werden, nachdem das Endgerät die Datei zuletzt synchronisierte, wobei eine Versionsnummer der vorbestimmten Version später ist als die Versionsnummer der Datei, die zuletzt durch das Endgerät synchronisiert wurde, und ein Wert der vorbestimmten Menge gleich der Mengenschwelle ist.

10. Server nach einem der Ansprüche 7 bis 9, wobei der Server ferner Folgendes umfasst:
ein zweites Empfangsmodul (404), das konfiguriert ist zum Empfangen von Identifikationsinformationen des Endgeräts, einer Versionsnummer für die aktuelle Synchronisation der Datei, die durch das Endgerät durchgeführt wird, und einer Benutzerkennung des Endgeräts, die durch das Endgerät gesendet werden;
ein Aktualisierungsmodul (405), das konfiguriert ist zum Aktualisieren, gemäß den Identifikationsinformationen des Endgeräts, der Versionsnummer für die aktuelle Synchronisation der Datei, die durch das Endgerät durchgeführt wird, und der Benutzerkennung des Endgeräts, eines Datensatzes einer Synchronisation, die durch einen Benutzer am Endgerät durchgeführt wird;
ein Abfragemodul (406), das konfiguriert ist zum Abfragen einer Versionsnummer der Datei, die zuletzt durch ein anderes Endgerät des Benutzers synchronisiert wurde; und
ein Löschmodul (407), das, falls die Versionsnummer für die aktuelle Synchronisation der Datei, die durch das Endgerät durchgeführt wird, früher als die Versionsnummer der Datei ist, die zuletzt durch das andere Endgerät des Benutzers synchronisiert wurde, konfiguriert ist zum Löschen, aus den Daten der verschiedenen Versionen der Datei, die im Server gespeichert sind, eines Operationsdatensatzes, der erzeugt wird, bevor die Dateisynchronisationsanforderung empfangen wird.

11. Endgerät, umfassend:
ein erstes Sendemodul (701), das konfiguriert ist zum Senden einer Dateisynchronisationsanforderung zu einem Server;
ein Suchmodul (702), das konfiguriert ist zum Suchen nach zweiten Datensatzdaten, wobei die zweiten Datensatzdaten einen Operationsdatensatz von Operationen umfassen, die an der Datei, die aktuell synchronisiert werden muss, durchgeführt werden, nachdem das Endgerät die Datei zuletzt synchronisierte;
ein Empfangsmodul (703), das konfiguriert ist zum Empfangen von ersten Datensatzdaten, die als die Serverreaktion auf die Dateisynchronisationsanforderung gesendet werden, wobei die ersten Datensatzdaten einen Operationsdatensatz umfassen, der, für die Datei einer vorbestimmten Version, in Daten verschiedener Versionen der Datei, die im Server gespeichert ist, erzeugt wird, nachdem das Endgerät die Datei zuletzt synchronisierte; und
ein Ausführungsmodul (704), das konfiguriert ist zum Erhalten, gemäß den ersten Datensatzdaten und den zweiten Datensatzdaten, einer Operation, die durch das Endgerät durchgeführt werden sollte, und zum Durchführen der Operation,
**dadurch gekennzeichnet, dass**
das Suchmodul (702) eine Sucheinheit beinhaltet, die konfiguriert ist zum Suchen nach jedem Operationsdatensatz von Operationen, die an der Datei durchgeführt werden, nachdem das Endgerät die Datei zuletzt synchronisierte, und
das Ausführungsmodul (704) eine Datensatzvereinfachungseinheit beinhaltet, die konfiguriert ist zum Vereinfachen der ersten Datensatzdaten und der zweiten Datensatzdaten durch Folgendes: Unterteilen des Operationsdatensatzes darin, indem er in grundlegende Operationsdatensätze von HINZUFÜGEN oder LÖSCHEN, die nur einen Operationspfad erfordern, umgewandelt wird, und Kombinieren der grundlegenden Operationsdatensätze, die nach der Unterteilung erhalten werden, gemäß dem Operationspfad, damit redundante Daten entfernt werden und eine vereinfachte finale Änderung der Datei, die durch die ersten und die zweiten Datensatzdaten bewirkt wird, dargelegt wird; und
das Ausführungsmodul (704) konfiguriert ist zum Erhalten der Operation, die durch das Endgerät durchgeführt werden sollte, durch Folgendes: Verwenden des Zeitpunkts, zu dem das Endgerät zuvor eine Synchronisation der Datei beendete, als einen Startpunkt; Kombinieren, in aufsteigender Reihenfolge der Operationszeit, von Operationsdatensätzen in den ersten Datensatzdaten und den zweiten Datensatzdaten, die denselben Operationspfad aufweisen; und Erhalten, gemäß einem kombinierten Operationsdatensatz, der Operation, die durch das Endgerät durchgeführt werden sollte.

12. Endgerät nach Anspruch 11, wobei das Suchmodul Folgendes umfasst:
eine erste Vereinfachungseinheit, die konfiguriert ist zum Unterteilen oder Kombinieren jedes Operationsdatensatzes gemäß einem Operationspfad, um die zweiten Datensatzdaten zu erhalten.

13. Endgerät nach Anspruch 11, wobei die ersten Datensatzdaten mindestens einen Operationsdatensatz umfassen und
das Ausführungsmodul Folgendes umfasst:
eine zweite Vereinfachungseinheit, die konfiguriert ist zum Unterteilen oder Kombinieren des mindestens einen Operationsdatensatzes gemäß einem Operationspfad, um die ersten Datensatzdaten zu vereinfachen; und
eine Ausführungseinheit, die konfiguriert ist zum Erhalten, gemäß vereinfachten ersten Datensatzdaten und den zweiten Datensatzdaten, der Operation, die durch das Endgerät durchgeführt werden sollte, und zum Durchführen der Operation.

## Revendications

1. Procédé de synchronisation de fichiers, consistant à :
recevoir (S101) une demande de synchronisation de fichiers envoyée par un terminal à un serveur ;
répondre (S102) à la demande de synchronisation de fichiers en recherchant des premières données d'enregistrement parmi des données de diverses versions du fichier qui doit être actuellement synchronisé par le terminal et qui est stocké sur le serveur, les premières données d'enregistrement comprenant un enregistrement d'opération pour le fichier d'une version prédéterminée après la dernière synchronisation du fichier par le terminal ; et
envoyer (S103) les premières données d'enregistrement au terminal, de sorte que le terminal obtienne, selon les premières données d'enregistrement et des secondes données d'enregistrement dans le terminal, une opération devant être réalisée par le terminal, les secondes données d'enregistrement comprenant un enregistrement d'opération relatif à des opérations réalisées sur le fichier après la dernière synchronisation du fichier par le terminal,
**caractérisé en ce que** :
avant l'envoi des premières données d'enregistrement au terminal, l'enregistrement d'opération est divisé en étant converti en enregistrements d'opération basiques ADD ou DELETE qui ne font intervenir qu'un seul chemin d'opération, et les enregistrements d'opération basiques obtenus après division sont combinés selon le chemin d'opération, de manière à supprimer les données redondantes et à présenter une variation finale simplifiée du fichier causée par les premières données d'enregistrement.

2. Procédé selon la revendication 1, dans lequel la demande de synchronisation de fichiers comprend un numéro de version du fichier qui a été synchronisé en dernier par le terminal et un dernier numéro de version pour la synchronisation actuelle ; et les premières données d'enregistrement comprennent tous les enregistrements d'opération générés pour le fichier de la version prédéterminée après la dernière synchronisation du fichier par le terminal, un numéro de version de la version prédéterminée étant postérieur au numéro de version du fichier qui a été synchronisé en dernier par le terminal et est antérieur ou égal au dernier numéro de version pour la synchronisation actuelle.

3. Procédé selon la revendication 1, dans lequel la demande de synchronisation de fichiers comprend un numéro de version du fichier qui a été synchronisé en dernier par le terminal et un seuil de quantité ; et
les premières données d'enregistrement comprennent une quantité prédéterminée d'enregistrements d'opération générés successivement pour le fichier de la version prédéterminée après la dernière synchronisation du fichier par le terminal, un numéro de version de la version prédéterminée étant postérieur au numéro de version du fichier qui a été synchronisé en dernier par le terminal, et une valeur de la quantité prédéterminée est égale au seuil de quantité.

4. Procédé selon l'une quelconque des revendications 1 à 3, le procédé consistant en outre, après l'envoi des premières données d'enregistrement au terminal, à :
recevoir une information d'identification du terminal, un numéro de version pour la synchronisation actuelle du fichier réalisée par le terminal, et un identifiant d'utilisateur du terminal, envoyés par le terminal ;
mettre à jour, selon l'information d'identification du terminal, le numéro de version pour la synchronisation actuelle du fichier réalisée par le terminal, et l'identifiant d'utilisateur du terminal, un enregistrement d'une synchronisation réalisée par un utilisateur sur le terminal ;
demander un numéro de version du fichier qui a été synchronisé en dernier par un autre terminal de l'utilisateur ; et
si le numéro de version pour la synchronisation actuelle du fichier réalisée par le terminal est antérieur au numéro de version du fichier qui a été synchronisé en dernier par l'autre terminal de l'utilisateur, supprimer, des données des diverses versions du fichier qui sont stockées sur le serveur, un enregistrement d'opération généré avant la réception de la demande de synchronisation de fichiers.

5. Procédé de synchronisation de fichiers, consistant à :
envoyer (S201) une demande de synchronisation de fichiers par un terminal à un serveur ;
rechercher (S202) des secondes données d'enregistrement, les secondes données d'enregistrement comprenant un enregistrement d'opération relatif à des opérations réalisées sur le fichier qui doit être actuellement synchronisé, après la dernière synchronisation du fichier par le terminal ;
recevoir (S203) des premières données d'enregistrement envoyées en tant que réponse du serveur à la demande de synchronisation de fichiers, les premières données d'enregistrement comprenant un enregistrement d'opération généré, pour le fichier d'une version prédéterminée, dans des données de diverses versions du fichier qui sont stockées sur le serveur, après la dernière synchronisation du fichier par le terminal ; et
obtenir (S204), selon les premières données d'enregistrement et les secondes données d'enregistrement, une opération qui doit être réalisée par le terminal, et réaliser l'opération,
le procédé étant **caractérisé en ce que** :
le procédé consiste en outre à rechercher chaque enregistrement d'opération relatif aux opérations réalisées sur le fichier après la dernière synchronisation du fichier par le terminal ;
les premières données d'enregistrement et les secondes données d'enregistrement sont simplifiées en divisant l'enregistrement d'opération correspondant en le convertissant en enregistrements d'opération basiques ADD ou DELETE qui ne font intervenir qu'un seul chemin, et en combinant les enregistrements d'opération basiques obtenus après division selon le chemin d'opération, de manière à supprimer les données redondantes et à présenter une variation finale simplifiée du fichier causée par les premières et les secondes données d'enregistrement ; et
l'obtention (S204) d'une opération qui doit être réalisée par le terminal consiste spécifiquement à : utiliser comme point de départ le point temporel où le terminal à précédemment terminé la synchronisation du fichier ; combiner, par ordre croissant d'heure d'opération, des enregistrements d'opération qui sont dans les premières données d'enregistrement et les secondes données d'enregistrement et qui ont un même chemin d'opération ; et obtenir, selon un enregistrement d'opération combiné, l'opération qui doit être réalisée par le terminal.

6. Procédé selon la revendication 5, le procédé consistant en outre, après l'obtention, selon les premières données d'enregistrement et les secondes données d'enregistrement, d'une opération qui doit être réalisée par le terminal, et après la réalisation de l'opération, à :
enregistrer un dernier numéro de version du fichier dans les premières données d'enregistrement en tant que numéro de version pour la synchronisation actuelle du fichier réalisée par le terminal ; et
envoyer au serveur une information d'identification du terminal, le numéro de version pour la synchronisation actuelle du fichier réalisée par le terminal, et un identifiant d'utilisateur du terminal, de sorte que le serveur mette à jour un enregistrement d'une synchronisation réalisée par un utilisateur sur le terminal.

7. Serveur, comprenant :
un premier module de réception (401), conçu pour recevoir une demande de synchronisation de fichiers envoyée par un terminal ;
un module de recherche (402), conçu pour répondre à la demande de synchronisation de fichiers en recherchant des premières données d'enregistrement parmi des données de diverses versions du fichier qui doit être actuellement synchronisé par le terminal et qui est stocké sur le serveur, les premières données d'enregistrement comprenant un enregistrement d'opération pour le fichier d'une version prédéterminée après la dernière synchronisation du fichier par le terminal ; et
un module d'envoi (403), conçu pour envoyer les premières données d'enregistrement au terminal, de sorte que le terminal obtienne, selon les premières données d'enregistrement et des secondes données d'enregistrement dans le terminal,
une opération devant être réalisée par le terminal, les secondes données d'enregistrement comprenant un enregistrement d'opération relatif à des opérations réalisées sur le fichier après la dernière synchronisation du fichier par le terminal,
**caractérisé en ce que** :
le serveur est conçu pour : avant l'envoi des premières données d'enregistrement au terminal par le module d'envoi (403), diviser l'enregistrement d'opération en le convertissant en enregistrements d'opération basiques ADD ou DELETE qui ne font intervenir qu'un seul chemin d'opération, et combiner les enregistrements d'opération basiques obtenus après division selon le chemin d'opération, de manière à supprimer les données redondantes et à présenter une variation finale simplifiée du fichier causée par les premières données d'enregistrement.

8. Serveur selon la revendication 7, dans lequel la demande de synchronisation de fichiers comprend un numéro de version du fichier qui a été synchronisé en dernier par le terminal et un dernier numéro de version pour la synchronisation actuelle ; et les premières données d'enregistrement comprennent tous les enregistrements d'opération générés pour le fichier de la version prédéterminée après la dernière synchronisation du fichier par le terminal, un numéro de version de la version prédéterminée étant postérieur au numéro de version du fichier qui a été synchronisé en dernier par le terminal et est antérieur ou égal au dernier numéro de version pour la synchronisation actuelle.

9. Serveur la revendication 7, dans lequel la demande de synchronisation de fichiers comprend un numéro de version du fichier qui a été synchronisé en dernier par le terminal et un seuil de quantité ; et
les premières données d'enregistrement comprennent une quantité prédéterminée d'enregistrements d'opération générés successivement pour le fichier de la version prédéterminée après la dernière synchronisation du fichier par le terminal, un numéro de version de la version prédéterminée étant postérieur au numéro de version du fichier qui a été synchronisé en dernier par le terminal, et une valeur de la quantité prédéterminée est égale au seuil de quantité.

10. Serveur selon l'une quelconque des revendications 7 à 9, le serveur comprenant en outre :
un second module de réception (404), conçu pour recevoir une information d'identification du terminal, un numéro de version pour la synchronisation actuelle du fichier réalisée par le terminal, et un identifiant d'utilisateur du terminal, envoyés par le terminal ;
un module de mise à jour (405), conçu pour mettre à jour, selon l'information d'identification du terminal, le numéro de version pour la synchronisation actuelle du fichier réalisée par le terminal, et l'identifiant d'utilisateur du terminal, un enregistrement d'une synchronisation réalisée par un utilisateur sur le terminal ;
un module de demande (406), conçu pour demander un numéro de version du fichier qui a été synchronisé en dernier par un autre terminal de l'utilisateur ; et
un module de suppression (407), conçu pour : si le numéro de version pour la synchronisation actuelle du fichier réalisée par le terminal est antérieur au numéro de version du fichier qui a été synchronisé en dernier par l'autre terminal de l'utilisateur, supprimer, des données qui correspondent aux diverses versions du fichier et qui sont stockées sur le serveur, un enregistrement d'opération généré avant la réception de la demande de synchronisation de fichiers.

11. Terminal, comprenant :
un premier module d'envoi (701), conçu pour envoyer une demande de synchronisation de fichiers à un serveur ;
un module de recherche (702), conçu pour rechercher des secondes données d'enregistrement, les secondes données d'enregistrement comprenant un enregistrement d'opération relatif à des opérations réalisées sur le fichier qui doit être actuellement synchronisé, après la dernière synchronisation du fichier par le terminal ;
un module de réception (703), conçu pour recevoir des premières données d'enregistrement envoyées en tant que réponse du serveur à la demande de synchronisation de fichiers, les premières données d'enregistrement comprenant un enregistrement d'opération généré, pour le fichier d'une version prédéterminée, dans des données de diverses versions du fichier qui sont stockées sur le serveur, après la dernière synchronisation du fichier par le terminal ; et
un module d'exécution (704), conçu pour obtenir, selon les premières données d'enregistrement et les secondes données d'enregistrement, une opération qui doit être réalisée par le terminal, et réaliser l'opération,
**caractérisé en ce que** :
le module de recherche (702) comprend une unité de recherche, conçue pour rechercher chaque enregistrement d'opération relatif aux opérations réalisées sur le fichier après la dernière synchronisation du fichier par le terminal, et
le module d'exécution (704) comprend une unité de simplification d'enregistrement conçue pour simplifier les premières données d'enregistrement et les secondes données d'enregistrement en divisant l'enregistrement d'opération à l'intérieur en le convertissant en enregistrements d'opération basiques ADD ou DELETE qui ne font intervenir qu'un seul chemin d'opération, et en combinant les enregistrements d'opération basiques obtenus après division selon le chemin d'opération, de manière à supprimer les données redondantes et à présenter une variation finale simplifiée du fichier causée par les premières et les secondes données d'enregistrement ; et
le module d'exécution (704) est conçu pour obtenir l'opération qui doit être réalisée par le terminal en utilisant comme point de départ le point temporel où le terminal à précédemment terminé la synchronisation du fichier ; en combinant, par ordre croissant d'heure d'opération, des enregistrements d'opération qui sont dans les premières données d'enregistrement et les secondes données d'enregistrement et qui ont un même chemin d'opération ; et en obtenant, selon un enregistrement d'opération combiné, l'opération qui doit être réalisée par le terminal.

12. Terminal selon la revendication 11, dans lequel le module de recherche comprend :
une première unité de simplification, conçue pour diviser ou combiner chaque enregistrement d'opération selon un chemin d'opération afin d'obtenir les secondes données d'enregistrement.

13. Terminal selon la revendication 11, dans lequel les premières données d'enregistrement comprennent au moins un enregistrement d'opération ; et
le module d'exécution comprend :
une seconde unité de simplification, conçue pour diviser ou combiner l'au moins un enregistrement d'opération selon un chemin d'opération afin de simplifier les premières données d'enregistrement ; et
une unité d'exécution, conçue pour obtenir, selon les premières données d'enregistrement simplifiées et les secondes données d'enregistrement, l'opération qui doit être réalisée par le terminal, et réaliser l'opération.
